(19) Europäisches Patentamt
European Patent Office
Office européen des brevets

(11) EP 2 471 832 B1

(12) # EUROPEAN PATENT SPECIFICATION

(45) Date of publication and mention of the grant of the patent:
**14.06.2017 Bulletin 2017/24**

(21) Application number: **10822018.7**

(22) Date of filing: **05.10.2010**

(51) Int Cl.:
***C08G 18/48*** *(2006.01)* ***C08G 18/63*** *(2006.01)*
***C08G 65/28*** *(2006.01)* ***C08G 101/00*** *(2006.01)*

(86) International application number:
**PCT/JP2010/067478**

(87) International publication number:
**WO 2011/043348 (14.04.2011 Gazette 2011/15)**

(54) **METHOD FOR PRODUCING SOFT POLYURETHANE FOAM AND SEAT**

VERFAHREN ZUR HERSTELLUNG EINES WEICHEN POLYURETHANSCHAUMSTOFFS UND EINER PLATTE DARAUS

PROCÉDÉ DE FABRICATION D'UNE MOUSSE SOUPLE DE POLYURÉTHANE ET SIÈGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.10.2009 JP 2009231933**

(43) Date of publication of application:
**04.07.2012 Bulletin 2012/27**

(73) Proprietor: **Asahi Glass Company, Limited**
**Tokyo 100-8405 (JP)**

(72) Inventors:
- **SASAKI, Takayuki**
  **Tokyo 100-8405 (JP)**
- **KUMAGAI, Naohiro**
  **Tokyo 100-8405 (JP)**
- **SUZUKI, Chitoshi**
  **Tokyo 100-8405 (JP)**
- **FURUMI, Masahito**
  **Tokyo 100-8405 (JP)**

(74) Representative: **Blodig, Wolfgang**
**Wächtershäuser & Hartz**
**Patentanwaltspartnerschaft mbB**
**Weinstrasse 8**
**80333 München (DE)**

(56) References cited:
**EP-A1- 1 911 783**
**EP-A1- 2 067 804**
**WO-A1-2006/115169**
**WO-A1-2008/038678**
**JP-A- 4 031 432**
**JP-A- 4 059 816**
**JP-A- 2002 543 228**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 471 832 B1

**Description**

TECHNICAL FIELD

The present invention relates to a process for producing a flexible polyurethane foam, and a seat using a flexible polyurethane foam produced by the process.

BACKGROUND ART

A flexible polyurethane foam can be obtained by reacting a polyol and a polyisocyanate compound in the presence of a urethane-forming catalyst and a blowing agent.

A flexible polyurethane foam is used, for example, as a material of a seat (a seat cushion or a seat back rest). As an example for a seat cushion, a seat cushion for an automobile may be mentioned. Particularly a seat cushion for an automobile is likely to be deteriorated due to external force by the movement of the user during its use, and accordingly improvement in mechanical properties such as the tear strength, the tensile strength and the elongation are desired.

In general, a polyoxyalkylene polyol used as a material of a polyurethane is produced by subjecting an alkylene oxide such as propylene oxide to ring-opening addition polymerization to an initiator such as a polyhydric alcohol by using an alkali catalyst such as sodium hydroxide or potassium hydroxide. In this production process, a monool having an unsaturated bond will form as a by-product, and if a flexible polyurethane foam is produced by using such a polyol having a high degree of total unsaturation, physical properties of the foam are likely to be deteriorated.

Whereas, the following Patent Documents 1 and 2 disclose a process for producing a polyurethane foam by using a polyol having a low degree of total unsaturation produced by using a double metal cyanide complex catalyst instead of the alkali catalyst.

PRIOR ART DOCUMENTS

**PATENT DOCUMENTS**

**Patent Document 1:** Japanese Patent No. 2,616,054
**Patent Document 2:** Japanese Patent No. 2,616,055

Document EP 1 911 783 A1 relates to a flexible polyurethane foam, a process for its production and a seat for an automobile. In paragraphs [0025]-[0026], it is also stated that shrinkage of the foam should be avoided. In paragraphs [0084]-[0085], polyether polyols are prepared from a ring opening addition polymerization of PO to glycerol in the presence of a DMC catalyst.

**DISCLOSURE OF INVENTION**

TECHNICAL PROBLEM

However, if a flexible polyurethane foam is produced by using **a** polyol prepared by a conventional method using a double metal cyanide complex catalyst, the foaming and curing foam shrinks, and no desired shape is obtained in some cases.

Under these circumstances, the present invention provides a production process capable of producing a flexible polyurethane foam excellent in mechanical properties, by which shrinkage of the foam can be reduced, and a seat using a flexible polyurethane foam produced by the process.

SOLUTION TO PROBLEM

The present invention provides the following [1] to [14].

[1] A process for producing a flexible polyurethane foam, which comprises reacting and foaming and curing a reactive mixture containing a polyol (A), a polyisocyanate compound (B), a catalyst (C) and a blowing agent (D), wherein the polyol (A) contains from 2 to 100 mass% of a polyoxyalkylene polyol (A1) obtained by the following production process in 100 mass% of the polyol (A);
process for producing the polyoxyalkylene polyol (A1): a process for producing a polyoxyalkylene polyol by subjecting an alkylene oxide to ring-opening addition polymerization to an initiator having a hydroxy group in the presence of a double metal cyanide complex catalyst; comprising

an initial step of supplying an alkylene oxide in an amount of from 5 to 20 parts by mass per 100 parts by mass of the initiator to a reaction system containing the initiator and the double metal cyanide complex catalyst to carry out reaction, and a polymerization step of newly supplying an alkylene oxide to the reaction system after the initial step to carry out ring-opening addition polymerization, wherein

in the initial step, the temperature of the reaction system when supply of the alkylene oxide is started is from 120 to 165°C, and the maximum temperature of the reaction system after supply of the alkylene oxide in the initial step is higher by from 15 to 50°C than the temperature when supply of the alkylene oxide is started.

[2] The process for producing a flexible polyurethane foam according to [1], wherein the polyol (A) contains from 40 to 100 mass% of the polyoxyalkylene polyol (A1) in 100 mass% of the polyol (A).

[3] The process for producing a flexible polyurethane foam according to [1] or [2], wherein the alkylene oxide supplied in the polymerization step is propylene oxide alone or a mixture of propylene oxide and ethylene oxide.

[4] The process for producing a flexible polyurethane foam according to any one of [1] to [3], wherein the double metal cyanide complex catalyst has tert-butyl alcohol as an organic ligand.

[5] The process for producing a flexible polyurethane foam according to any one of [1] to [4], wherein the process for producing the polyoxyalkylene polyol (A1) further has, after the polymerization step, a step of reacting ethylene oxide with the polyol formed in the polymerization step in the presence of an alkali metal catalyst.

[6] The process for producing a flexible polyurethane foam according to any one of [1] to [5], wherein of the polyoxyalkylene polyol (A1), the average number of hydroxy groups is from 2 to 8, the hydroxy value is from 5 to 45 mgKOH/g, the degree of unsaturation is at most 0.030 meq/g, and the oxyethylene group content is from 5 to 30 mass%.

[7] The process for producing a flexible polyurethane foam according to any one of [1] to [6], wherein the average number of hydroxy groups of the polyoxyalkylene polyol (A1) is from 2.5 to 4.5.

[8] The process for producing a flexible polyurethane foam according to any one of [5] to [7], wherein the entire amount of the oxyethylene groups contained are present at terminal portions of the molecule.

[9] The process for producing a flexible polyurethane foam according to any one of [1] to [8], wherein the reactive mixture further contains a crosslinking agent (E), and the crosslinking agent (E) is at least one crosslinking agent selected from the following first crosslinking agent (E1) and second crosslinking agent (E2):

first crosslinking agent (E1): a polyoxyalkylene polyol having a hydroxy value of from 160 to 1,000 mgKOH/g;
second crosslinking agent (E2): a compound having no polyether chain, having at least two active hydrogen groups, and in a case where the active hydrogen groups are hydroxy groups, having a hydroxy value higher than 1,000 mgKOH/g.

[10] The process for producing a flexible polyurethane foam according to any one of [1] to [9], wherein the reactive mixture further contains the following cell opener (F):

cell opener (F): a polyoxyalkylene polyol having an average of from 2 to 8 hydroxy groups, a hydroxy value of from 20 to 200 mgKOH/g, and an ethylene oxide content of from 50 to 100 mass%.

[11] The process for producing a flexible polyurethane foam according to any one of [1] to [10], wherein the blowing agent (D) is water.

[12] The process for producing a flexible polyurethane foam according to any one of [1] to [11], wherein the polyol (A) contains polymer particles (H) in an amount of from 0 to 30 mass%.

[13] The process for producing a flexible polyurethane foam according to [12], wherein in the polyol (A), the following polymer-dispersed polyol (A21) is blended:

(A21): a polymer-dispersed polyol (A21) having the above polymer particles (H) dispersed in a polyol (A2) which is a polyol other than the polyoxyalkylene polyol (A1);
(A2): a polyol having an average of from 2 to 8 hydroxy groups and a hydroxy value of from 25 to 160 mgKOH/g.

[14] A seat using a flexible polyurethane foam produced by the process as defined in any one of [1] to [13].

## ADVANTAGEOUS EFFECTS OF INVENTION

According to the process for producing a flexible polyurethane foam of the present invention, the shrinkage of a foam can be reduced, and a flexible polyurethane foam excellent in mechanical properties can be produced.

The obtained flexible polyurethane foam can suitably be used for a seat, and as it is particularly excellent in mechanical properties, it is suitable as a seat cushion for an automobile or a furnishing cushion.

BRIEF DESCRIPTION OF DRAWINGS

Fig. 1 is a drawing illustrating an evaluation method in Examples.
Fig. 2 is a cross-sectional view schematically illustrating a mold used in Examples.
Fig. 3 is a drawing illustrating an evaluation method in Examples.

DESCRIPTION OF EMBODIMENTS

In the present invention, "the seat" is a seat cushion or a seat back rest produced by a flexible polyurethane foam.
In this specification, "the reactive mixture" is a liquid containing, in addition to the polyol and the polyisocyanate compound, a blowing agent, a foam stabilizer, a catalyst and the like, and compounding ingredients as the case requires.
In this specification, "a polyol system solution" is a solution to be reacted with the polyisocyanate compound. It contains no polyisocyanate compound and contains the polyol, the blowing agent, the foam stabilizer, the catalyst and the like and compounding ingredients as the case requires. The compounding ingredients in "the polyol system solution" may not be the same as the compounding ingredients in "the reactive mixture", and some of compounding ingredients in "the reactive mixture" may preliminarily be incorporated in the polyisocyanate compound to be mixed with "the polyol system solution".
In this specification, "the polyoxyalkylene polyol (A1)" is a compound having a structure having repeating units comprising an oxyalkylene group connected in a chain form, having hydroxy groups at its molecular terminals, and having at least two such hydroxy groups per molecule (i.e. a polyol). Hereinafter, "the polyoxyalkylene polyol (A1)" will sometimes be referred to as "a polyol (A1)".
In this specification, the number average molecular weight (Mn), the mass average molecular weight (Mw) and the molecular weight distribution (Mw/Mn) of the polyol are so-called molecular weights as calculated as polystyrene, determined by means of gel permeation chromatography using a polystyrene polymer as a reference.
In this specification, the hydroxy value of the polyol is a value measured in accordance with JIS K1557 (2007 edition). An average molecular weight as calculated as hydroxy value of the polyol is a value calculated in accordance with the following formula from the hydroxy value (OHV, unit: mgKOH/g) and the average number x of hydroxy groups of an initiator used for production of the polyol.
Average molecular weight as calculated as hydroxy value = (56,100/OHV) $\times$ (x) Further, in this specification, "the degree of unsaturation" is a value measured in accordance with JIS K1557 (2007 edition).

<Polyol (A)>

The polyol (A) contains a polyol (A1) which is a polyoxyalkylene polyol obtainable by subjecting an alkylene oxide to ring-opening addition polymerization to an initiator in the presence of a double metal cyanide complex catalyst by the following production process. The double metal cyanide complex catalyst will sometimes be referred to as a DMC catalyst.

<Double metal cyanide complex catalyst (DMC catalyst)>

As the DMC catalyst in the present invention, known one may be used. It is representatively represented by the following formula (1).

$$M^1{}_a[M^2{}_b(CN)_c]_d e(M^3{}_f X_g) h(H_2O) i(L) \qquad (1)$$

wherein each of $M^1$ to $M^3$ is a metal, X is a halogen atom, L is an organic ligand, and a, b, c, d, e, f, g, h and i are numbers valuable depending on the valencies of the metals, the coordination number of the organic ligand, etc.
In the formula, $M^1$ or $M^3$ is at least one metal atom selected from the group consisting of Zn(II), Fe(II), Fe(III), Co(II), Ni(II), Mo(IV), Mo(VI), Al(III), V(V), Sr(II), W(IV), W(VI), Mn(II), Cr(III), Cu(II), Sn(II) and Pb(II), preferably Zn(II) or Fe(II). Roman numerals in brackets following the symbols of elements of the metals mean the valencies of the respective metals, and the same applies hereinafter. $M_1$ and $M_3$ in one molecule may be the same or different. They are preferably the same.
$M^2$ is at least one metal element selected from the group consisting of Fe(II), Fe(III), Co(II), Co(III), Cr(II), Cr(III), Mn(II), Mn(III), Ni(II), V(IV) and V(V), preferably Co(III) or Fe(III).

X is a halogen atom.

L is an organic ligand. As the organic ligand, an alcohol, an ether, a ketone, an ester, an amine, an amide or the like may be used, and an alcohol is more preferred. A preferred organic ligand is water-soluble one, and as specific examples, one or more compounds selected from tert-butyl alcohol, n-butyl alcohol, iso-butyl alcohol, tert-pentyl alcohol, iso-pentyl alcohol, N,N-dimethylacetamide, ethylene glycol dimethyl ether (also called glyme), diethylene glycol dimethyl ether (also called diglyme), triethylene glycol dimethyl ether (also called triglyme), ethylene glycol mono-tert-butyl ether, iso-propyl alcohol and dioxane. Dioxane may be either 1,4-dioxane or 1,3-dioxane, and is preferably 1,4-dioxane.

A particularly preferred organic ligand is tert-butyl alcohol, tert-pentyl alcohol, ethylene glycol mono-tert-butyl ether or a combination or tert-butyl alcohol and ethylene glycol mono-tert-butyl ether. When such an organic ligand is used, a particularly high polymerization activity will be obtained, such being preferred with a view to making the molecular weight distribution of the polyol (A1) be narrow.

The DMC catalyst in the present invention is preferably one wherein the organic ligand L is tert-butyl alcohol or ethylene glycol mono-tert-butyl ether, more preferably tert-butyl alcohol, particularly in view of the catalytic activity.

Particularly, preferred is a compound of the formula (1) wherein each of $M^1$ and $M^3$ which are the same, is Zn(II) or Fe(II), $M^2$ is Co(III) or Fe(III), X is halogen, and L is tert-butyl alcohol or ethylene glycol mono-tert-butyl ether, and particularly preferred is one wherein each of $M^1$ and $M^3$ is Zn(II), $M^2$ is Co(III), X is potassium, and L is tert-butyl alcohol.

A method for producing the DMC catalyst is not particularly limited, and a known method may suitably be employed. It may, for example, be a method wherein a cake (solid component) is separated by filtration and further dried, the cake being obtainable by (i) a method wherein an organic ligand is made to coordinate to a reaction product obtainable by reacting a halogenated metal salt and cyanometalate acid and/or an alkali metal cyanometalate in an aqueous solution, and then the formed solid component is separated, and the separated solid component is further washed with an organic ligand aqueous solution, or (ii) a method wherein a halogenated metal salt and cyanometalate acid and/or an alkali metal cyanometalate are reacted in an organic ligand aqueous solution, the obtained reaction product (solid component) is separated, and the separated solid component is further washed with an organic ligand aqueous solution.

In the above alkali metal cyanometalate to be used for preparation of the DMC catalyst, the metal constituting the cyanometalate corresponds to $M^2$ in the above formula (1).

The cyanometalate acid or the alkali metal cyanometalate used as materials for preparation of the DMC catalyst is preferably $H_3[Co(CN)_6]$, $Na_3[Co(CN)_6]$ or $K_3[Co(CN)_6]$, particularly preferably $Na_3[Co(CN)_6]$ or $K_3[Co(CN)_6]$.

Further, in the method for producing the DMC catalyst, at a stage prior to separation by filtration of the cake, a polyoxyalkylene polyol may be mixed with the liquid having the solid component dispersed in the organic ligand aqueous solution, and water and excessive organic ligand are distilled off from the obtained mixed liquid to prepare a DMC catalyst mixture (hereinafter sometimes referred to as "a slurry-form DMC catalyst") in the form of a slurry having a DMC catalyst dispersed in the polyoxyalkylene polyol.

The polyoxyalkylene polyol to be used for preparation of the slurry-form DMC catalyst may be prepared by subjecting an alkylene oxide to ring-opening addition polymerization to at least one initiator selected from polyhydric alcohols, using an anionic polymerization catalyst or a cationic polymerization catalyst. The polyoxyalkylene polyol to be used for such a purpose is preferably one having from 2 to 8 hydroxy groups and a number average molecular weight (Mn) of from 300 to 5,000, whereby the polymerization catalyst of the DMC catalyst tends to be high, and the viscosity of the slurry-form DMC catalyst will not be high, thus leading to handling efficiency.

The amount of the DMC catalyst to be used for the method for producing the polyol (A1) is set to be an amount more than the amount required to obtain the aimed molecular weight of the polyol (A1) to be obtained.

Further, it is preferred that the amount of the DMC catalyst used is small as far as possible, so that the amounts of the DMC catalyst and the metal compounds derived from the DMC catalyst remaining in the obtained polyol (A1) are small, whereby the influence of the remaining DMC catalyst over the reaction rate of the polyol (A1) and the polyisocyanate compound or physical properties of a flexible polyurethane foam to be produced by using the polyol (A1) as the material are reduced.

Usually, after the alkylene oxide is subjected to ring-opening addition polymerization to the initiator, an operation of removing the DMC catalyst from the obtained polyol (A1) is carried out. However, when the amount of the DMC catalyst remaining in the polyol (A1) is small, and the following reaction with the polyisocyanate compound or properties of the final product will not be impaired, the polyol (A1) without removing the DMC catalyst can be subjected to the following step, whereby the production efficiency of the polyol (A1) can be increased.

Specifically, the total amount of metals (for example, Zn and Co) derived from the DMC catalyst contained in the polyol (A1) at the time of completion of the polymerization reaction is preferably from 1 to 30 ppm, particularly preferably at most 10 ppm. When the total amount of metals derived from the DMC catalyst is at most 30 ppm, removal of the remaining catalyst from the obtained polyol (A1) tends to be unnecessary.

Further, as the case requires, removal and/or reactivation of the DMC catalyst from the obtained polyol (A1) may be carried out. As its method, for example, an adsorption method using an adsorbent selected from synthetic silicate (such as magnesium silicate or aluminum silicate), an ion exchange resin and activated white arc, a neutralization method by an amine, an alkali metal hydroxide, an organic acid or a mineral acid, a combination of the neutralization method and the adsorption method may, for example, be employed.

<Polyol (A1)>

In the present invention, the polyol (A1) has a polyoxyalkylene chain having oxyalkylene groups connected, and has at least two hydroxy groups. It is preferred that at least part of the oxyalkylene groups are oxypropylene groups, particularly preferably, oxypropylene groups and oxyethylene groups.

Further, the polyoxyalkylene chain may contain a small number of units other than the oxyalkylene group. Such units may, for example, be units formed by ring-opening of a cyclic compound (other than an alkylene oxide) capable of ring-opening addition polymerization, such as units formed by ring-opening of a compound having an epoxy group other than an alkylene oxide, units formed by ring-opening of a cyclic ester, units formed by ring-opening of a cyclic dicarboxylic acid anhydride, or units formed by ring-opening of a cyclic carbonate. The cyclic compound other than an alkylene oxide is preferably used for preparation of the polyol (A1) as mixed with an alkylene oxide. The amount of such units other than the oxyalkylene groups is preferably from 0 to 50 mol%, more preferably from 0 to 30 mol%, to the total amount of the units other than an oxyalkylene group and the oxyalkylene groups. It is particularly preferred that substantially no units other than an oxyalkylene group are contained.

The polyol (A1) in the present invention is obtainable by subjecting an alkylene oxide to ring-opening addition polymerization to an initiator having at least two hydroxy groups in the presence of the DMC catalyst. Further, a polyoxyalkylene polyol having oxyethylene groups at its terminals, obtainable by further reacting ethylene oxide with a polyoxyalkylene polyol obtainable by using the DMC catalyst, in the presence of an alkali metal catalyst, is also the polyol (A1) in the present invention.

[Initiator]

The initiator to be used in the present invention is a compound having from 2 to 12 hydroxy groups and having a number average molecular weight (Mn) of from 18 to 20,000.

The initiator may, for example, be specifically water; a dihydric alcohol such as ethylene glycol, diethylene glycol, propylene glycol, dipropylene glycol, 1,3-propanediol, 1,4-cyclohexanediol, 1,3-butanediol, 1,4-butanediol, 1,6-hexanediol or 1,4-cyclohexanediol; a polyhydric alcohol of trihydric or higher, such as glycerin, diglycerin, trimethylolpropane, pentaerythritol, dipentaerythritol or tripentaerythritol; a saccharide or a derivative thereof, such as glucose, sorbitol, dextrose, fructose, sucrose or methyl glucoside; or a phenol such as bisphenol A, bisphenol F, bisphenol S, novolac, resol or resorcin. Such compounds may be used alone or in combination of two or more.

Further, a polyoxyalkylene polyol obtainable by polymerizing an alkylene oxide to such a compound by a known method may also be used as the initiator.

The polyoxyalkylene polyol to be used as the initiator preferably has a number average molecular weight (Mn) of from 300 to 20,000 and has from 2 to 12 hydroxy groups per one molecule. Further, the hydroxy value of such a compound is preferably at most 187 mgKOH/g. Further, the polyoxyalkylene polyol to be used as the initiator is preferably a compound having a hydroxy value higher by at least 30 mgKOH/g than the hydroxy value of the aimed polyoxyalkylene polyol, particularly preferably a compound having a hydroxy value higher by at least 40 mgKOH/g.

The number average molecular weight (Mn) of the initiator is from 18 to 20,000, preferably from 300 to 10,000, particularly preferably from 600 to 5,000. By using an initiator having a number average molecular weight (Mn) of at least 300, the time until initiation of the addition polymerization or the copolymerization in the presence of the DMC catalyst can be shortened.

Further, when an initiator having a number average molecular weight (Mn) of at most 20,000 is used, the viscosity of the initiator will not be too high, and the addition polymerization or the copolymerization tends to be uniform. The number average molecular weight (Mn) of the initiator is lower than the number average molecular weight (Mn) of the polyol (A1) obtainable by using it. The difference between the number average molecular weight of the initiator and the number average molecular weight of a polyether obtainable by using it (i.e. the amount of units formed by ring-opening of a cyclic monomer) is preferably at least 500, particularly preferably at least 1,000.

Further, in a case where a compound is constituted only by molecules with the same molecular weight, such as a low molecular weight alcohol as the initiator, the molecular weight determined from the chemical formula is regarded as the number average molecular weight (Mn).

The number of hydroxy groups in the initiator is preferably from 2 to 12, more preferably from 2 to 8, particularly preferably from 2 to 6. When an initiator having at most 12 hydroxy groups is used, the molecular weight distribution of the polyol (A1) to be obtained tends to be narrow.

In a case where two or more compounds are used in combination as the initiator, the average number of hydroxy groups per one molecule is preferably from 2 to 12, more preferably from 2 to 8, particularly preferably from 2 to 6.
Further, the hydroxy value of the initiator is preferably at most 6,300 mgKOH/g, more preferably at most 300 mgKOH/g, particularly preferably at most 187 mgKOH/g. Further, the hydroxy value of the initiator is preferably higher by at least 30 mgKOH/g than the hydroxy value of the aimed polyoxyalkylene polyol, particularly preferably higher by at least 40 mgKOH/g.

[Alkylene oxide]

At least part of the alkylene oxide used in the present invention is preferably propylene oxide, and combination with another alkylene oxide is also preferred. The alkylene oxide other than propylene oxide is preferably ethylene oxide. Further, a $C_{4-20}$ alkylene oxide may be used in combination. The alkylene oxide other than propylene oxide to be used in the present invention may, for example, be ethylene oxide, 1,2-butylene oxide, 2,3-butylene oxide or a $C_{5-20}$ $\alpha$-olefin oxide, and at least one member selected from the group consisting of them may be used.
Among them, ethylene oxide, 1,2-butylene oxide or 2,3-butylene oxide is preferred, ethylene oxide is particularly preferred. In a case where two or more of alkylene oxides are used, the ring-opening addition polymerization of the alkylene oxides to the initiator may be any of random polymerization, block polymerization and a combination of the random polymerization and the block polymerization. In the after-mentioned step (c), substantially only ethylene oxide is used.
In the present invention, the alkylene oxide may be used in combination with another cyclic monomer copolymerizable with the alkylene oxide. Such another cyclic monomer is a compound capable of ring-opening addition polymerization or a compound capable of alternating copolymerization with the alkylene oxide. It may, for example, be a compound having one epoxy ring other than the alkylene oxide, a cyclic ester, a cyclic polycarboxylic anhydride or a cyclic carbonate.
The compound having one epoxy ring other than the alkylene oxide may, for example, be a halogen-containing alkylene oxide, a cycloalkylene oxide such as cyclopentene oxide or cyclohexene oxide, styrene oxide, or a glycidyl compound such as a glycidyl alcohol or a glycidyl alkyl ester.
The cyclic ester is a $C_{3-9}$ cyclic ester, i.e. a so-called lactone. The cyclic ester may, for example, be specifically $\beta$-propiolactone, $\delta$-valerolactone, $\varepsilon$-caprolactone, methyl-$\varepsilon$-caprolactone, $\alpha$-methyl-$\beta$-propiolactone, $\beta$-methyl-$\beta$-propiolactone, methoxy-$\varepsilon$-caprolactone or ethoxy-$\varepsilon$-caprolactone, and one or more selected from them may be used.
Among them, $\delta$-valerolactone or $\varepsilon$-caprolactone is preferred, and $\varepsilon$-caprolactone is more preferred.
The cyclic polycarboxylic anhydride will not undergo ring-opening addition polymerization by itself, and forms a polyester chain by alternating polymerization with the cyclic ether. The cyclic polycarboxylic anhydride is preferably a cyclic dicarboxylic anhydride. Specifically, the following compounds may be mentioned.
An aliphatic dicarboxylic anhydride such as maleic anhydride, succinic anhydride, dodecenyl succinic anhydride or octadecenyl succinic anhydride, an aromatic dicarboxylic anhydride such as phthalic anhydride, an alicyclic dicarboxylic anhydride such as hexahydrophthalic anhydride, tetrahydrophthalic anhydride, 3-methyl-hexahydrophthalic anhydride, 4-methyl-hexahydrophthalic anhydride, 3-methyl-1,2,3,6-tetrahydrophthalic anhydride or 4-methyl-1,2,3,6-tetrahydrophthalic anhydride. Maleic anhydride, phthalic anhydride or tetrahydrophthalic anhydride is preferred, and phthalic anhydride or tetrahydrophthalic anhydride is particularly preferred.
The cyclic carbonate may, for example, be ethylene carbonate or propylene carbonate.
In a case where a cyclic monomer other than an alkylene oxide is reacted as mixed with the alkylene oxide, the proportion of the alkylene oxide in the mixture is preferably from 50 to 100 mol%, particularly preferably from 70 to 100 mol%. Further, the amount of units formed by ring-opening of the cyclic monomer other than an alkylene oxide in the polyol (A1) is properly from 0 to 30 mol%, preferably from 0 to 10 mol%, to all the units. In the present invention, it is particularly preferred that substantially no units of a cyclic monomer other than an alkylene oxide are contained.

[Polymerization solvent]

For preparation of the polyol (A1), a solvent which will not adversely affect the reaction may properly be used. Such a polymerization solvent may be hexane, cyclohexane, benzene or ethyl methyl ketone. When no polymerization solvent is used, the solvent removal step from the polyol (A1) as the final product is unnecessary, thus increasing the productivity. Further, the catalytic activity of the DMC catalyst is decreased in some cases due to influences of the moisture or the antioxidant contained in the polymerization solvent, and such disadvantages can be prevented by using no polymerization solvent.

<Method for producing polyol (A1)>

The method for producing the polyol (A1) in the present invention is a method of subjecting an alkylene oxide to ring-opening addition polymerization to an initiator having hydroxy groups in the presence of a double metal cyanide complex catalyst to produce a polyoxyalkylene polyol. At least part of the alkylene oxide to be subjected to ring-opening addition polymerization in the presence of a double metal cyanide catalyst is preferably propylene oxide.
In the after-mentioned initial step and polymerization step, it is preferred to use propylene oxide as the alkylene oxide. Further, in these steps, propylene oxide and another alkylene oxide may be used in combination.
In the after-mentioned initial step, an alkylene oxide in an amount of from 5 to 20 parts by mass per 100 parts by mass of the initiator is supplied to a reaction system containing the initiator and the double metal cyanide complex catalyst to carry out reaction, and in the polymerization step after the initial step, an alkylene oxide is newly supplied to the reaction system to carry out ring-opening addition polymerization.
In the initial step, the temperature of the reaction system when supply of the alkylene oxide is started is from 120 to 165°C, and the maximum temperature of the reaction system after supply of the alkylene oxide in the initial step is higher by from 15 to 50°C than the temperature when supply of the alkylene oxide is started.
This process is preferably carried out by a batch method. Specifically, it is conducted as follows.

a. Initial Step (hereinafter sometimes referred to as "step (a)")

First, to a pressure resistant reactor equipped with a stirring means and a temperature controlling means, the entire amount of the initiator and the entire amount of the DMC catalyst are put and mixed to prepare a reaction liquid. Usually, the initiator is a viscous liquid, and the DMC catalyst is in the form of particles or in the form of a slurry containing the particles. The reaction liquid may contain a polymerization solvent as the case requires. Further, the reaction liquid may contain a component added as the case requires in the step of preparing the DMC catalyst.
In this production process, "mixing" of the initiator and the DMC catalyst means a state where both are uniformly mixed as a whole, and in the step (a), it is required that they are in such a "mixed" state.
In the step (a) of the process for producing the polyol (A1) in the present invention (hereinafter sometimes referred to as this process), the mixing means is not particularly limited so long as the DMC catalyst and the initiator (including components added as the case requires) can be sufficiently mixed. The mixing means is usually stirring means. The stirring power of the stirring means is preferably from 4 to 500 $kW/m^3$, more preferably from 8 to 500 $kW/m^3$, particularly preferably from 12 to 500 $kW/m^3$. Here, the stirring power is a value calculated from a known value, and this value is a power requirement per unit liquid amount of the content, calculated from the volume and the viscosity of the content in the pressure resistant reactor, the shape of the reactor, the shape and the number of revolutions of the stirring vanes, etc. In the present invention, the above reaction liquid corresponds to the content in the pressure resistant reactor.
As stirring means in the step (a) of this process, specifically, stirring by stirring vanes, by bubbling by inert gas such as nitrogen gas, by electromagnetic waves or ultrasonic waves, or the like may be mentioned, and stirring by the stirring vanes is preferred. As a preferred example of the stirring vanes, the stirring vanes disclosed in JP-A-2003-342361 may be mentioned. The stirring vanes are particularly preferably large-scaled vanes, and the large-scaled vanes such as FULLZONE (registered trademark) vanes manufactured by Shinko Pantec Co., Ltd., or MAXBLEND (registered trademark) vanes manufactured by Sumitomo Heavy Industries, Ltd. may be mentioned. Further, paddle vanes, pitched paddle vanes, turbine vanes and propeller vanes may, for example, be used, and at that time, the radius of the stirring vanes is in a range of preferably from 20 to 99%, more preferably from 30 to 90%, particularly preferably from 40 to 80% to the inner radius (the radius of the inside) of the pressure resistant reactor. The larger the radius of the stirring vane becomes, the larger the shearing stress becomes, and therefore the chance of contact of the viscous liquid (initiator) and the particles (the DMC catalyst) will be increased. Accordingly, the step (a) in this process is carried out preferably in a pressure resistant reactor equipped with stirring means having a large radius of stirring vanes.
The shape and the material of the pressure resistant reactor to be used in the step (a) of this process are not particularly limited, however, as the material, a container made of heat resistant glass or a metal is preferred.
Then, preferably, the interior in the pressure resistant reactor is replaced with nitrogen, whereby oxygen in the reaction liquid is removed. The amount of oxygen in the reaction liquid is preferably at most 1 mass% based on the amount of nitrogen.
In the step (a) of this process, the pressure in the pressure resistant reactor is preferably at most 0.020 MPa by the absolute pressure. It is more preferably at most 0.015 MPa by the absolute pressure, particularly preferably at most 0.010 MPa by the absolute pressure. If it exceeds 0.020 MPa by the absolute pressure, a pressure increase along with a decrease in the space volume in the pressure resistant reactor along with the polymerization tends to be intense. Further, evacuation of the pressure resistant reactor does not lead to an effect of improving the activity of the catalyst, but may be carried out if necessary in the process if the moisture content in the initiator is too high.
Then, the reaction liquid is heated with stirring, and then in a state where the temperature of the reaction liquid is at the predetermined initial temperature, an alkylene oxide is supplied and reacted (step (a)). In this specification, the initial temperature means a temperature of the reaction liquid when supply of the alkylene oxide is started in the step (a).

The initial temperature of the reaction liquid is from 120 to 165°C, preferably from 125 to 150°C, particularly preferably from 130 to 140°C. When the initial temperature is at least the lower limit of the above range, the catalytic activity will be remarkably good, and when the initial temperature is at most the upper limit of the above range, thermal decomposition of components themselves contained in the reaction liquid will not occur.

Specifically, it is preferred that the reaction liquid is heated to the initial temperature with stirring, and supply of the alkylene oxide is started in a state where the temperature of the reaction liquid is maintained. For example, heating is stopped when the reaction liquid reaches the predetermined initial temperature, and supply of the alkylene oxide is started before the temperature of the reaction liquid starts decreasing. The time after heating is stopped until supply of the alkylene oxide is started is not particularly limited but is preferably within one hour in view of the efficiency.

The heating time to heat the reaction liquid to the predetermined temperature is preferably from 10 minutes to 24 hours, particularly preferably from 15 minutes to 2 hours. When the heating time is at least the lower limit of the above range, the reaction liquid can uniformly be heated, and when the heating time is at most the upper limit of the above range, such is efficient in view of time.

The alkylene oxide to be used in the step (a) is preferably propylene oxide alone or a mixture of propylene oxide with another alkylene oxide (such as ethylene oxide or a $C_{4-6}$ alkylene oxide), more preferably propylene oxide alone or a mixture of propylene oxide with a small amount of ethylene oxide, particularly preferably propylene oxide alone. In a case where a mixture of propylene oxide with another alkylene oxide is used, the proportion of such another alkylene oxide is preferably at most 30 mol%, particularly preferably at most 10 mol% to the entire amount of the alkylene oxides.

In the step (a), if the amount of supply of the alkylene oxide is too small, the initial activity tends to be insufficient, and if it is too large, runaway reaction may occur. Thus, it is considered to be from 5 to 20 parts by mass per 100 parts by mass of the initiator contained in the reaction liquid. It is preferably from 8 to 15 parts by mass, particularly preferably from 10 to 12 parts by mass.

Supply of the alkylene oxide in the step (a) is carried out in a state where the pressure resistant reactor is sealed. When the alkylene oxide is supplied to the reaction liquid, immediately after the supply, the internal pressure of the pressure resistant reactor will be increased along with vaporization of the unreacted alkylene oxide. Then, once the DMC catalyst is activated, a reaction of the alkylene oxide with the initiator occurs, and simultaneously with the start of the decrease in the internal pressure of the pressure resistant reactor, the temperature of the reaction liquid is increased by the heat of reaction. After completion of the reaction of the entire amount of the alkylene oxide supplied, the internal pressure of the pressure resistant reactor is decreased to the same level as before the supply, and an increase in the temperature of the reaction liquid by the heat of reaction no more occurs.

In this specification, the step (a) is a step from initiation of the supply of the alkylene oxide to completion of the reaction of the alkylene oxide. Completion of the reaction of the alkylene oxide can be confirmed by a decrease in the internal pressure of the pressure resistant reactor. That is, completion of the step (a) is at a time when the internal pressure of the pressure resistant reactor is decreased to the same level as before supply of the monomer. The time of the initial step is preferably from 10 minutes to 24 hours, particularly preferably from 15 minutes to 3 hours. When it is at least the lower limit of the above range, the DMC catalyst can be activated, and when it is at most the upper limit of the above range, such is efficient in view of time.

In the present invention, the maximum temperature of the reaction liquid in the step (a) is higher by from 15°C to 50°C than the initial temperature of the reaction liquid. The maximum temperature is more preferably higher by at least 20°C, particularly preferably higher by at least 25°C, than the initial temperature. Since the heat release by the reaction of the alkylene oxide with the initiator is large, usually the temperature of the reaction liquid is increased to the maximum temperature which is higher by at least 15°C than the initial temperature even without heating, and thereafter, the temperature is gradually decreased even without cooling. The larger the amount of the alkylene oxide, the larger the temperature increase of the reaction liquid by the heat of reaction. Cooling of the reaction liquid may be conducted as the case requires, when the temperature is too increased. After the reaction liquid reaches the maximum temperature, the reaction liquid is preferably cooled so as to shorten the time required for the temperature decrease.

Cooling may be carried out, for example, by a method of providing a cooling pipe through which a coolant flows in the reaction liquid to carry out heat exchange. In such a case, the temperature of the reaction liquid can be controlled by the temperature of the coolant, the coolant flow rate, and the timing of flow of the coolant.

By increasing the temperature of the reaction liquid to a temperature higher by at least 15°C than the initial temperature, the molecular weight distribution of a polyol (A1) to be obtained can be made narrower. A maximum temperature of the reaction liquid higher by more than 50°C than the initial temperature is unfavorable in view of the pressure resistant structure of the reactor.

The maximum temperature is preferably from 135 to 180°C, more preferably from 145 to 180°C, particularly preferably from 150 to 180°C.

It is preferred that the temperature of the reaction liquid in the step (a) is kept to be a temperature of at least the initial temperature after it is increased along with the reaction of the alkylene oxide with the initiator and reaches the maximum temperature until the reaction of the alkylene oxide is completed, particularly preferably, it is kept to a temperature higher by at least 15°C than the initial temperature.

b. Polymerization Step (hereinafter sometimes referred to as "step (b)")

After completion of the step (a), while an alkylene oxide is newly supplied, the temperature of the reaction liquid is adjusted to a predetermined polymerization temperature, and polymerization reaction is carried out with stirring to obtain the desired polyol (A1).

The alkylene oxide to be used in the step (b) is preferably propylene oxide alone or a mixture of propylene oxide with another alkylene oxide (such as ethylene oxide or a $C_{4-6}$ alkylene oxide), more preferably propylene oxide alone or a mixture of propylene oxide with ethylene oxide, particularly preferably propylene oxide alone. In a case where a mixture with another alkylene oxide is used, the proportion of such another alkylene oxide is preferably at most 40 mol%, particularly preferably at most 20 mol%, to the entire amount of the alkylene oxides.

In the step (b), the alkylene oxide may be supplied continuously, or the entire amount of the alkylene oxide to be used for the step (b) may be supplied all at once. Further, in the step (b), the alkylene oxide may be supplied dividedly. That is, the alkylene oxide may sequentially be supplied dividedly in several times. In a case where it is sequentially supplied dividedly in several times, it is preferred that after the formerly supplied alkylene oxide is reacted to a certain extent, the next alkylene oxide is supplied. In a case where the alkylene oxide is continuously supplied, the type of the alkylene oxide may be changed, and in the case of the successive supply also, the type of the alkylene oxide may be changed at a different stage of supply. For example, supply of propylene oxide alone and supply of a mixture of propylene oxide with ethylene oxide may separately be carried out.

The proportion of propylene oxide in the entire amount of the alkylene oxides supplied in the step (b) is properly from 70 to 100 mol%, preferably from 85 to 100 mol%. Further, when the mixture of propylene oxide and ethylene oxide is dividedly supplied, the proportion of ethylene oxide may somewhat be high, and the proportion of ethylene oxide in the mixture of propylene oxide and ethylene oxide may be at least 60 mol%.

As the pressure resistant reactor to be used in the step (b) of this process, it is preferred to use a pressure resistant autoclave container, but in a case where the boiling point of the alkylene oxide is high, it may not be pressure resistant. The material is not particularly limited. Further, as the reactor, the container used in the above step (a) may be used as it is.

In the step (b) of this process, to newly supply the alkylene oxide to the mixture (the mixture of a compound formed by reaction of the alkylene oxide to the initiator with the activated DMC catalyst) formed in the step (a) to carry out reaction, the step (b) is preferably carried out in the same manner as the step (a). For example, the mixture formed in the step (a) is preferably stirred by means of a stirring power of preferably from 4 to 500 $kW/m^3$, more preferably from 8 to 500 $kW/m^3$, particularly preferably from 12 to 500 $kW/m^3$, in the same manner as in the step (a). As the stirring vanes, propeller vanes, paddle vanes, MAXBLEND vanes or disk turbine vanes may be used, and large-scaled vanes are preferred to uniformly mix the content in the reactor. Further, a disper, a homomixer, a colloid mill, a Nauta mixer or the like used for emulsification or dispersion may also be used. Further, mixing by ultrasonic waves may be employed without using the stirring vanes. Such stirring methods may be combined. In a case where a common stirring method of using the stirring vanes is employed, the speed of revolution of the stirring vanes is preferably as high as possible within a range where a large amount of gas of the vapor phase in the reactor is not included in the reaction liquid so that the stirring efficiency is not decreased.

In the step (b) of this process, the reaction method is preferably a batch method, however, a continuous method may also be employed wherein addition of the alkylene oxide and the mixture containing the DMC catalyst after the above step (a) and the reaction product in the step (a) and withdrawal of the polyol (A1) as the product in the step (b) are carried out simultaneously. Particularly when the initiator has an average molecular weight per one hydroxy group of at most 300, the continuous method is preferred.

In the step (b), when the alkylene oxide is supplied to the mixture formed in the step (a), immediately after the supply, the internal pressure of the pressure resistant reactor is increased along with vaporization of the unreacted alkylene oxide. Then, the reaction of ring-opening addition polymerization of the alkylene oxide to the reaction product in the step (a) (product formed by reaction of the alkylene oxide with the initiator) occurs, and simultaneously with the start of a decrease in the internal pressure of the pressure resistant reactor, heat of reaction is generated. After completion of the reaction of the entire amount of the alkylene oxide supplied, the internal pressure of the pressure resistant reactor is decreased to the same level as before supply.

The completion of the reaction of the alkylene oxide supplied can be confirmed by a decrease in the internal pressure of the pressure resistant reactor.

In the step (b), the temperature (polymerization temperature) of the reaction liquid when the alkylene oxide supplied is reacted is preferably from 125 to 180°C, particularly preferably from 125 to 160°C. When the polymerization temperature is at least the lower limit of the above range, a favorable reaction rate will be obtained, and the amount of remaining unreacted product in the final product can be reduced. Further, when the polymerization temperature is at most the upper limit of the above range, high activity of the DMC catalyst can favorably be maintained, and the molecular weight distribution can be made narrow.

After completion of the reaction of the entire amount of the alkylene oxide, it is preferred that the reaction liquid is cooled and purification of the reaction product is carried out.

The supply rate of the alkylene oxide supplied in the step (b) is preferably as low as possible, whereby the molecular weight distribution of a polymer to be obtained can be made narrow, however, such lowers the production efficiency, and accordingly the supply rate is preferably set balancing them. A specific supply rate is preferably from 1 to 200 mass%/hr to the entire mass of the polyol (A1) assumed as the final product. Further, the supply rate may successively be changed during the polymerization reaction.

The reaction time in the step (b) of this process is preferably from 10 minutes to 40 hours, particularly preferably from 30 minutes to 24 hours. When the reaction time is at least the lower limit of the above range, the reaction can be controlled, and the reaction time of at most the upper limit of the above range is preferred in view of the efficiency.

The pressure of the pressure resistant reactor in the step (b) of this process is preferably at most 1 MPa by the absolute pressure, particularly preferably at most 0.8 MPa, in view of easiness of the operation and the equipment.

One obtained by further subjecting an alkylene oxide different from one used in the step (b) to ring-opening addition polymerization to the polyol (A1) obtained by polymerization using the DMC catalyst as mentioned above, by using a polymerization catalyst other than the DMC catalyst, may be used as the final polyol (A1). Particularly in a case where propylene oxide alone or a mixture of propylene oxide with another alkylene oxide (such as ethylene oxide) is used as the alkylene oxide in the polymerization step, the proportion of the hydroxy groups in the formed polyoxyalkylene polyol being hydroxy groups (such as secondary hydroxy groups) with low reactivity tends to be high. Accordingly, in order to increase the reactivity of the polyol (A1), it is preferred to convert the hydroxy group with low reactivity to a primary hydroxy group in many cases. In such a case, it is preferred to react ethylene oxide to convert the terminals to primary hydroxy groups, thereby to obtain a polyoxyalkylene polyol having a high proportion of primary hydroxy groups. For the reaction of subjecting ethylene oxide to ring-opening addition to the terminals, use of the DMC catalyst is inappropriate, and use of an alkali metal catalyst is preferred. As the alkali metal catalyst, for example, an alkali metal hydroxide, an alkali metal carbonate or an alkali metal hydride is used and made to act as a catalyst to alkoxylate the hydroxy groups. The alkali metal catalyst is preferably an alkali metal hydroxide such as sodium hydroxide (NaOH), potassium hydroxide (KOH) or cesium hydroxide (CsOH), particularly preferably potassium hydroxide.

c. Ethylene Oxide Reaction Step (hereinafter sometimes referred to as "step (c)")

The step of subjecting ethylene oxide to ring-opening addition to the polyoxyalkylene polyol obtained in the above step (b) will sometimes be referred to as the step (c). The step (c) may be carried out by a conventionally known means to convert terminal hydroxy groups to primary hydroxy groups.

Specifically, to the reaction liquid after completion of the step (b), the alkali metal catalyst such as an alkali metal hydroxide is added to alkoxylate the hydroxy groups of the product in the step (b) and ethylene oxide is further supplied to subject it to ring-opening addition reaction. By the amount of the DMC catalyst in the polyoxyalkylene polyol at the completion of the step (b) being small, the alkali metal catalyst can be added without removing the DMC catalyst from the product in the step (b) to deactivate the DMC catalyst and replace it with the alkali metal catalyst. By the reaction of ethylene oxide in the presence of the alkali metal catalyst, oxyethylene groups (in this specification, also referred to as terminal oxyethylene groups) are introduced to the terminals of the polyoxyalkylene polyol obtained in the step (b), whereby a polyoxyalkylene polyol (hereinafter sometimes referred to as "a polyol (A1-EO)" having terminal oxyethylene groups is obtained. Thus, the proportion of primary hydroxy groups of the polyoxyalkylene polyol is increased, and a polyoxyalkylene polyol having high reactivity is obtained. The polyol (A1-EO) is also one of the polyols (A1) in the present invention.

The amount of the alkali metal catalyst used in the step (c) is preferably as small as possible. The amount of use is preferably, for example, at a level of 3,000 ppm relative to the amount of the polyol (A1-EO) to be obtained as a final product.

The reaction temperature of ethylene oxide in the step (c) is preferably from 30 to 160°C, more preferably from 50 to 150°C, particularly preferably from 60 to 150°C. The reaction in the step (c) is preferably carried out with stirring. Further, the above polymerization solvent may be used.

The amount of ethylene oxide supplied in the step (c) is such an amount that the proportion (terminal oxyethylene group content) of the block chains consisting of oxyethylene groups at the terminals is preferably from 5 to 30 mass%, particularly preferably from 10 to 20 mass%, per 100 mass% of the polyoxyalkylene polyol (A1-EO) to be finally obtained. When the content of the terminal oxyethylene groups is at least the lower limit of the above range, sufficient reactivity with the polyisocyanate compound (B) is achieved, and when it is at most the upper limit of the above range, the reaction with the polyisocyanate compound (B) can be controlled.

The supply rate of ethylene oxide in the step (c) is preferably from 1 to 200 mass%/hr to the entire mass of the polyol (A1-EO) assumed as the final product. Further, the supply rate may sequentially be changed during the reaction.

Further, deactivation of the DMC catalyst and removal of the DMC catalyst may be carried out from the polyol (A1) obtained by this process, as the case requires. Similarly, as the case requires, deactivation or removal of the alkali metal catalyst used in the step (c) or the like may be carried out. Particularly when the alkali metal catalyst is used, as its amount of use is relatively large, usually it should be removed. As a method therefor, for example, an adsorption method using an adsorbent selected from synthetic silicate (such as magnesium silicate or aluminum silicate), an ion exchange resin and activated white earth, a neutralization method by an amine, an alkali metal hydroxide, phosphoric acid, an organic acid or its salt such as lactic acid, succinic acid, adipic acid or acetic acid, or an inorganic acid such as sulfuric acid, nitric acid or hydrochloric acid, or a combination of the neutralization method and the adsorption method may, for example, be mentioned.

To the polyol (A1) thus obtained, a stabilizer may be added as the case requires to prevent deterioration during the long term storage.

The stabilizer may be a hindered phenol type antioxidant such as BHT (dibutylhydroxytoluene).

The average number of hydroxy groups of the polyol (A1) is preferably from 2 to 8, and in view of the durability and hardness of a flexible polyurethane foam to be obtained, it is more preferably from 2.5 to 6, particularly preferably from 2.5 to 4.5.

The hydroxy value of the polyol (A1) is preferably from 5 to 45 mgKOH/g, and in view of mechanical properties of a flexible polyurethane foam to be obtained, it is more preferably from 5 to 35 mgKOH/g, particularly preferably from 5 to 24 mgKOH/g.

Per 100 mass% of the polyol (A1) to be finally obtained, the total content of oxyethylene groups contained in the polyol (A1) is preferably from 5 to 30 mass%, more preferably from 5 to 20 mass%, particularly preferably from 10 to 20 mass%. All the oxyethylene groups of this amount are preferably terminal oxyethylene groups. When the amount of the oxyethylene groups is at least the lower limit of the above range, sufficient reactivity with the polyisocyanate compound (B) will be achieved, and when it is at most the upper limit of the above range, the reactivity with the polyisocyanate compound (B) will not be too high, and the moldability, etc. of the flexible polyurethane foam tend to be good. In the case of the polyol (A1) having oxyethylene groups both at its terminals and at a portion other than the terminals, the content of oxyethylene groups at the portion other than the terminals is preferably at most 25 mass%, particularly preferably at most 20 mass%.

By this process, by use of the DMC catalyst, formation of a monool having an unsaturated bond as a by-product can be suppressed. By this process, the degree of unsaturation of the polyol (A1) can be made to be at most 0.030 meq/g, preferably at most 0.02 meq/g.

The primary rate (unit: mol%) represented by the proportion of primary hydroxy groups among the hydroxy groups present in the polyol (A1) is preferably at least 80%, particularly preferably at least 85%. When it is at least 80 mass%, sufficient reactivity with the polyisocyanate compound (B) will be achieved. The primary rate can be increased by increasing the content of oxyethylene groups at the terminals.

By this process, by carrying out the step (a) at a specific temperature, the molecular weight distribution (Mw/Mn) of the polyol (A1) to be obtained can be made narrower, whereby the polyol (A1) can be made to have a low viscosity, thus improving the handling efficiency.

Particularly, with respect to a polyol (A1) having a low hydroxy value and having a high-molecular-weight, the broader the molecular weight distribution, the more a high-molecular-weight product having a number average molecular weight of at least 100,000 will be contained, and the viscosity of the polyol will be remarkably high, and accordingly the effect of lowering the viscosity by making the molecular weight distribution narrow is significant.

For example, according to this process, it is possible to produce a high-molecular-weight polyol (A1) having an average of from 2.5 to 4.5 hydroxy groups, a hydroxy vale of from 5.0 to 11.2 mgKOH/g, preferably from 5.0 to 7.0 mgKOH/g, a degree of unsaturation of at most 0.030 meq/g, and a molecular weight distribution of at most 1.100, preferably at most 1.090.

According to this process, a polyol (A1) having a narrow molecular weight distribution can be produced. The reason why the polyol (A1) having a narrow molecular weight distribution can be obtained is not clearly understood, but is estimated as follows. The DMC catalyst, when prepared, is obtained only as an agglomerate with no catalytic activity. Accordingly, for the ring-opening addition polymerization using the DMC catalyst, it is essential to activate the catalyst.

In the above step (a), the agglomerate is pulverized, whereby the surface area of the DMC catalyst is increased, and the catalytic activity will develop. At this time, by activation of the catalyst under conditions under which a maximum temperature higher than the initial temperature is achieved, by using the initiator, the DMC catalyst and the alkylene oxide, pulverization of the DMC catalyst agglomerate is carried out more efficiently, and the catalytic activity is more improved. Thus, until concretion of the ring-opening addition polymerization of the alkylene oxide in the step (b), the high activity of the DMC catalyst is favorably maintained, and a large amount of a polymer having a uniform molecular weight is formed.

The content of the polyol (A1) in the polyol (A) is from 2 to 100 mass%, preferably from 10 to 100 mass%, more preferably from 20 to 100 mass%. Further, the content of the polyol (A1) is further preferably from 40 to 100 mass%, particularly preferably from 40 to 90 mass%, most preferably from 40 to 80 mass%. When the content of the polyol (A1) is at least 10 mass%, the durability of a flexible polyurethane foam to be obtained will be good, and when it is at least 40 mass%, mechanical properties of a flexible polyurethane foam to be obtained will be good.

In a case where a polyol system solution having the polyol (A1) and the after-mentioned polyol (A2), the polymer-dispersed polyol (A21), a blowing agent, a crosslinking agent, a cell opener, a foam stabilizer and the like mixed in the polyol (A), is stored in an external storage warehouse or an indoor storage warehouse, or a material tank of a high pressure foaming machine in circulation under a high pressure of from 5 to 20 MPa, excellent storage stability will be obtained when the molecular weight distribution of the polyol (A1) is slightly broader. Specifically, when the molecular weight distribution of the polyol (A1) is 1.050, although it depends on the content in the polyol (A), a polyol (A1) having a molecular weight distribution broader by about 1.01 times is more excellent in the long term storage stability. Particularly, excellent effect of maintaining the cell uniformity when a flexible polyurethane foam is produced is achieved. The reason is not clearly understood, but is considered that with a polyol (A1) having a slightly broader molecular weight distribution, when water is selected as the blowing agent, dispersibility of water and the foam stabilizer will be more uniform, and excellent long term storage stability of from one day to three months of the polyol system solution is achieved.

<Another polyol (A2)>

The polyol (A) may contain another polyol (A2) not corresponding to the polyol (A1), within a range not to impair the effects of the present invention.

Such another polyol (A2) may, for example, be another polyoxyalkylene polyol not included in a category of the polyol (A1), a polyester polyol or a polycarbonate polyol. They may be selected from known products. Such another polyol (A2) may be used alone or in combination of two or more. Further, one included in either of the after-mentioned crosslinking agent (E) and cell opener (F) is not included in such another polyol (A2).

Such another polyol (A2) is preferably one having an average of from 2 to 8 hydroxy groups and a hydroxy value of from 25 to 160 mgKOH/g. When the average number of hydroxy groups is at least 2, the durability and the riding comfortability of the foam tend to be good, and when it is at most 8, mechanical properties of the flexible polyurethane foam to be produced tend to be good. Further, when the hydroxy value is at least 25 mgKOH/g, the viscosity tends to be low, whereby good workability will be achieved. When it is at most 160 mgKOH/g, mechanical properties of the flexible polyurethane foam to be produced tend to be good.

The number average molecular weight (Mn) of another polyol (A2) is preferably from 700 to 22,000, more preferably from 1,500 to 20,000, particularly preferably from 2,000 to 15,000.

The amount of use of another polyol (A2) is preferably from 0 to 60 mass%, more preferably from 0 to 40 mass%, particularly preferably from 0 to 30 mass% of the polyol (A), in view of the durability of the foam.

<Polymer-dispersed polyol>

The polyol (A) may contain polymer particles (H). By incorporating the polymer particles (H), the hardness, the air flow and other physical properties of a flexible polyurethane foam can be improved.

For example, a polymer-dispersed polyol comprising the polyol (A1) as the base polyol and having the polymer particles (H) dispersed may be contained in the polyol (A), or a polymer-dispersed polyol (A21) comprising another polyol (A2) as the base polyol and having the polymer particles (H) dispersed may be contained in the polyol (A), or both of them may be employed. It is preferred to use the polymer-dispersed polyol (A21) having the polymer particles (H) dispersed in another polyol (A2).

The polymer particles (H) are preferably particles obtainable by polymerizing a vinyl monomer (M), and may be particles obtained by polymerizing a condensed monomer (N). In view of the moldability and the foam physical properties, particles obtainable by polymerizing a vinyl monomer (M) are preferred.

The particle size of the polymer particles is preferably from 0.01 to 10 μm, more preferably from 0.03 to 8 μm, particularly preferably from 0.05 to 5 μm. When the particle size is at most the upper limit of the above range, the viscosity of the polymer-dispersed polyol tends to be low, thus leading to easy handling, and when it is at least the lower limit of the above range, a flexible polyurethane foam to be obtained will moderately be defoamed, and favorable air flow will be obtained. The particle size of the polymer particles is measured by a Microtrac ultrafine particle size analyzer UPA-EX150 manufactured by NIKKISO CO., LTD.

[Vinyl monomer (M)]

The vinyl monomer (M) in the present invention may, for example, be acrylonitrile, styrene, a methacrylate or an acrylate. The vinyl monomer may be used alone or in combination of two or more. The vinyl monomer is preferably a combination of acrylonitrile with styrene.

[Condensed monomer (N)]

The condensed polymer (N) in the present invention may, for example, be polyester, polyurea, polyurethane or melamine.
The polymer-dispersed polyol is obtainable by polymerizing a monomer in the base polyol to form the polymer particles.
The hydroxy value of the polymer-dispersed polyol is calculated in accordance with the following formula (1) from the mass change as between before and after the polymerization of the monomer.

$$\text{Hydroxy value} = (\text{hydroxy value of base polyol}) \times (\text{mass of base polyol charged})/(\text{mass of obtained polymer-dispersed polyol}) \qquad (1)$$

The hydroxy value of the entire polymer-dispersed polyol is usually lower than the hydroxy value of the base polyol.
In a case of using the polymer-dispersed polyol (A21) having the polymer particles (H) dispersed in another polyol (A2), the hydroxy value of the polymer-dispersed polyol (A21) is preferably from 15 to 50 mgKOH/g, particularly preferably from 20 to 40 mgKOH/g.
In the case of using the polymer-dispersed polyol (A21), the content (including the polymer particles) of the polymer-dispersed polyol (A21) in the polyol (A) is preferably higher than 0 and at most 60 mass%, more preferably from 10 to 60 mass%, particularly preferably from 20 to 50 mass%.
Further, the content of the polymer particles (H) in the entire polyol (A) is preferably at most 30 mass%, particularly preferably at most 25 mass%. When the content of the polymer particles (H) is at most 30 mass%, the viscosity of the polyol (A) will be appropriate, and excellent workability will be achieved. Although the lower limit of the content of the polymer particles (H) is not particularly limited, it is preferably at least 5 mass% with a view to favorably obtaining an effect by incorporation of the polymer particles, particularly preferably at least 10 mass%.

<Another high-molecular-weight active hydrogen compound>

As a compound to be reacted with the polyisocyanate compound (B), it is possible to use a compound having active hydrogen other than the polyol (A) (in this specification, hereinafter referred to as another high-molecular-weight active hydrogen compound) in combination with the polyol (A). However, one included in either of the after-mentioned crosslinking agent (E) and cell opener (F) is not included in such another high-molecular-weight active hydrogen compound.
Such another high-molecular-weight active hydrogen compound may, for example, be a high-molecular-weight polyamine having at least 2 primary amino groups or secondary amino groups; a high-molecular-weight compound having at least one primary amino group or secondary amino group and at least one hydroxy group; or a piperazine polyol.
The high-molecular-weight polyamine or the high-molecular-weight compound may be a compound obtained by converting some or all hydroxy groups in a polyoxyalkylene polyol to amino groups; or a compound obtained in such a manner that a prepolymer having isocyanate groups at its terminals, is obtained by reacting a polyoxyalkylene polyol with an excess equivalent of a polyisocyanate compound, and the isocyanate groups of the prepolymer are converted to amino groups by hydrolysis.
The piperazine polyol is a polyoxyalkylene polyol obtainable by subjecting an alkylene oxide to ring-opening addition polymerization to piperazines.
The piperazines mean piperazine or a substituted piperazine wherein a hydrogen atom in the piperazine is substituted by an organic group such as an alkyl group or an aminoalkyl group.
The piperazines are required to have at least two active hydrogen atoms.
In the piperazine polyol, two nitrogen atoms constituting a piperazine ring constitute tertiary amines.
The piperazines may be piperazine, alkyl piperazines in which a hydrogen atom bonded to a carbon atom constituting the ring is substituted by a lower alkyl group (such as 2-methylpiperazine, 2-ethylpiperazine, 2-butylpiperazine, 2-hexylpiperazine, 2,5-, 2,6-, 2,3- or 2,2-dimethylpiperazine or 2,3,5,6- or 2,2,5,5-tetramethylpiperazine) or N-aminoalkylpiperazines in which a hydrogen atom bonded to a nitrogen atom constituting the ring, is substituted by an aminoalkyl group (such as N-(2-aminoethyl)piperazine), preferably substituted piperazines, and particularly preferably substituted piperazines having at least 3 nitrogen atoms in its molecule, such as piperazine having hydrogen substituted by e.g. an aminoalkyl group.

Further, as the substituted piperazines, N-substituted piperazines are preferred, N-aminoalkylpiperazines are more preferred, and N-(aminoethyl)piperazine is particularly preferred.

An alkylene oxide to be subjected to ring-opening addition polymerization to such piperazines, is preferably an alkylene oxide having at least 2 carbon atoms, such as ethylene oxide, propylene oxide, 1,2-butylene oxide, 2,3-butylene oxide or styrene oxide.

The molecular weight per functional group of such another high-molecular-weight active hydrogen compound is preferably at least 400, particularly preferably at least 800. The molecular weight per functional group is preferably at most 5,000.

The average number of functional groups of such another high-molecular-weight active hydrogen compound is preferably from 2 to 8.

The proportion of such another high-molecular-weight active hydrogen compound is preferably at most 20 mass%, based on the total amount (100 mass%) of the polyol (A) and another high-molecular-weight active hydrogen compound. When the proportion of such another high-molecular-weight active hydrogen compound is at most 20 mass%, the reactivity with the polyisocyanate compound (B) will not be too high, whereby the moldability or the like of the flexible polyurethane foam tends to be good.

<Polyisocyanate compound (B)>

The polyisocyanate compound (B) may, for example, be an aromatic polyisocyanate compound having at least 2 isocyanate groups, a mixture of two or more of such compounds, or a modified polyisocyanate obtained by modifying it. Specifically, it is preferably at least one member selected from the group consisting of tolylene diisocyanate (TDI), diphenylmethane diisocyanate (MDI), polymethylene polyphenyl isocyanate (common name: polymeric MDI) and modified products thereof. The modified products may, for example, be a prepolymer modified product, a nurate modified product, an urea modified product and a carbodiimide modified product. The polyisocyanate compounds (B) may be used alone or in combination of two or more.

Among them, TDI or MDI is preferably contained, and in view of weight saving of a flexible polyurethane foam to be obtained, at least TDI is preferably contained, and a mixture of TDI and MDI is particularly preferred. The mixing ratio (mass ratio) TDI/MDI of TDI to MDI is, for example, from 100/0 to 0/100, preferably from 100/0 to 10/90, more preferably from 90/10 to 50/50.

The polyisocyanate compound (B) may be a prepolymer. The prepolymer may be a prepolymer of TDI, MDI or polymeric MDI with a polyol derived from a natural fat/oil, a polyoxyalkylene polyol having an alkylene oxide subjected to ring-opening addition polymerization to the polyol derived from a natural fat/oil, or a polyoxyalkylene polyol derived from petroleum.

The amount of the polyisocyanate compound (B) used is preferably such an amount that the isocyanate index is from 70 to 125, more preferably from 80 to 120, particularly preferably from 85 to 120. The isocyanate index is a value represented by 100 times of the number of isocyanate groups based on the total active hydrogen of the polyol (A), another high-molecular-weight active hydrogen compound, the crosslinking agent (E), water, and the like.

<Catalyst (C)>

The catalyst (C) is a catalyst to accelerate a urethane-forming reaction.

As the catalyst (C), an amine compound, an organic metal compound, a reactive amine compound or a metal carboxylate may, for example, be mentioned. Such catalysts (C) may be used alone or in combination of two or more.

As the amine compound, triethylenediamine, a dipropylene glycol solution of bis-((2-dimethylamino)ethyl)ether and an aliphatic amine such as morpholine may, for example, be mentioned.

The reactive amine compound is a compound wherein a part of the amine compound structure is converted to a hydroxy group or an amino group so as to be reactive with an isocyanate group.

As the reactive amine compound, dimethylethanolamine, trimethylaminoethylethanolamine and dimethylaminoethoxyethoxyethanol may, for example, be mentioned.

The amount of the amine compound catalyst or the reactive amine compound catalyst, is preferably at most 2 parts by mass, particularly preferably from 0.05 to 1.5 parts by mass, per 100 parts by mass in total of the polyol (A) and another high-molecular-weight active hydrogen compound.

The organic metal compound may, for example, be an organic tin compound, an organic bismuth compound, an organic lead compound or an organic zinc compound. Specific examples may be di-n-butyltin oxide, di-n-butyltin dilaurate, di-n-butyltin, di-n-butyltin diacetate, di-n-octyltin oxide, di-n-octyltin dilaurate, monobutyltin trichloride, din-butyltin dialkyl mercaptan, and di-n-octyltin dialkyl mercaptan.

The amount of the organic metal compound is preferably at most 2 parts by mass, particularly preferably from 0.005 to 1.5 parts by mass, per 100 parts by mass in total of the polyol (A) and another high-molecular-weight active hydrogen compound.

<Blowing agent (D)>

As the blowing agent (D), preferred is at least one member selected from water and an inert gas. In view of handling efficiency and reduction in the environmental burden, water alone is preferred.

As the inert gas, air, nitrogen gas or liquified carbon dioxide gas may be mentioned.

The amount of such a blowing agent (D) may be adjusted depending on the requirement such as a blowing magnification.

When only water is used as the blowing agent, the amount of water is preferably at most 10 parts by mass, more preferably from 0.1 to 8 parts by mass, per 100 parts by mass in total of the polyol (A) and another high-molecular-weight active hydrogen compound.

<Crosslinking agent (E)>

In the present invention, as the case requires, a crosslinking agent (E) may be used. By use of the crosslinking agent (E), an effect such as improvement in the hardness of a flexible polyurethane foam is obtained.

As the crosslinking agent (E), a compound having at least two groups having active hydrogen (hereinafter referred to as active hydrogen groups in this specification) is used. The active hydrogen group may be a hydroxy group, a primary amino group or a secondary amino group. The crosslinking agent (E) may be used alone or in combination of two or more. However, compounds included in the polyol (A1) and the after-mentioned cell opener (F) are not included in the crosslinking agent (E).

As the crosslinking agent (E), it is preferred to use the following first crosslinking agent (E1) and/or second crosslinking agent (E2).

[First crosslinking agent (E1)]

The first crosslinking agent (E1) is a compound which is a polyoxyalkylene polyol having at least two hydroxy groups, obtainable by means of a step of subjecting an alkylene oxide to ring-opening addition polymerization in the presence of a catalyst, and which has a hydroxy value of from 160 to 1,000 mgKOH/g.

The first crosslinking agent (E1) may be a low molecular weight polyoxyalkylene polyol obtainable by adding an alkylene oxide to a polyhydric alcohol.

It may, for example, be specifically a bisphenol A-alkylene oxide adduct, a glycerin-alkylene oxide adduct, a trimethylolpropane-alkylene oxide adduct, a pentaerythritol-alkylene oxide adduct, a sorbitol-alkylene oxide adduct, a sucrose-alkylene oxide adduct, an aliphatic amine-alkylene oxide adduct, an alicyclic amine-alkylene oxide adduct, a heterocyclic polyamine-alkylene oxide adduct or an aromatic amine-alkylene oxide adduct. Among them, with a view to improving the hardness of a flexible polyurethane foam to be obtained, a sorbitol-alkylene oxide adduct is preferred.

The number of active hydrogen groups in the first crosslinking agent (E1) is preferably from 2 to 8, more preferably from 3 to 6.5. The hydroxy value of the first crosslinking agent (E1) is preferably from 160 to 1,000 mgKOH/g, particularly preferably from 160 to 600 mgKOH/g.

[Second crosslinking agent (E2)]

The second crosslinking agent (E2) is a compound which has no polyoxyalkylene chain and has at least two active hydrogen groups and a hydroxy value higher than 1,000 mgKOH/g.

The second crosslinking agent (E2) may be an amino alcohol, a polyhydric alcohol or an amine type crosslinking agent having a hydroxy value higher than 1,000 mgKOH/g. The amine type crosslinking agent is preferably an aromatic polyamine, an aliphatic polyamine or an alicyclic polyamine.

The amino alcohol or the polyhydric alcohol may, for example, be an ethanolamine such as monoethanolamine, diethanolamine or triethanolamine, or ethylene glycol, 1,4-butanediol, neopentyl glycol, 1,6-hexanediol, diethylene glycol, triethylene glycol, dipropylene glycol, glycerin or N-alkyldiethanol. With respect to the ethanolamine, when it is produced, ammonia or a concentrated ammonia solution and ethylene oxide are reacted in the presence of a catalyst in some cases, but the ethanolamine to be finally obtained contains no polyether chain and is included in the second crosslinking agent (E2).

The aromatic polyamine is preferably an aromatic diamine. The aromatic diamine is preferably an aromatic diamine having at least one substituent selected from an alkyl group, a cycloalkyl group, an alkoxy group, an alkylthio group and an electron-attractive group, in an aromatic nucleus having amino groups bonded thereto, particularly preferably a diaminobenzene derivative.

With respect to the above substituents except for the electron-attractive group, from 2 to 4 substituents are preferably bonded to the aromatic nucleus having amino groups bonded thereto, more preferably at least one at an ortho-position to the position where the amino group is bonded, particularly preferably, they are bonded at all positions.

With respect to the electron-attractive group, 1 or 2 groups are preferably bonded to the aromatic nucleus having amino groups bonded thereto. The electron-attractive group and another substituent may be bonded to one aromatic nucleus.

The alkyl group, alkoxy group and alkylthio group preferably have at most 4 carbon atoms.

The cycloalkyl group is preferably a cyclohexyl group.

The electron-attractive group is preferably a halogen atom, a trihalomethyl group, a nitro group, a cyano group or an alkoxycarbonyl group, particularly preferably a chlorine atom, a trifluoromethyl group or a nitro group.

The aliphatic polyamine may, for example, be a diaminoalkane having at most 6 carbon atoms, a polyalkylene polyamine having a hydroxy value higher than 1,000 mgKOH/g, a polyamine obtainable by converting some or all hydroxy groups in a low-molecular-weight polyoxyalkylene polyol to amino groups, having a hydroxy value higher than 1,000 mgKOH/g, or an aromatic compound having at least 2 aminoalkyl groups.

The alicyclic polyamine may be a cycloalkane having at least 2 amino groups and/or aminoalkyl groups.

Specific examples of the amine type crosslinking agent may be 3,5-diethyl-2,4(or 2,6)-diaminotoluene (DETDA), 2-chloro-p-phenylenediamine (CPA), 3,5-dimethylthio-2,4(or 2,6)-diaminotoluene, 1-trifluoromethyl-3,5-diaminobenzene, 1-trifluoromethyl-4-chloro-3,5-diaminobenzene, 2,4-toluenediamine, 2,6-toluenediamine, bis(3,5-dimethyl-4-aminophenyl)methane, 4,4-diaminodiphenylmethane, ethylenediamine, m-xylenediamine, 1,4-diaminohexane, 1,3-bis(aminomethyl)cyclohexane and isophorone diamine, and preferred is diethyltoluenediamine (that is one type or a mixture of two or more types of 3,5-diethyl-2,4(or 2,6)-diaminotoluene), dimethylthiotoluenediamine or a diaminobenzene derivative such as monochlorodiaminobenzene or trifluoromethyldiaminobenzene.

The number of the active hydrogen groups in the second crosslinking agent (E2) is preferably from 2 to 8, particularly preferably from 2 to 6. In a case where the second crosslinking agent (E2) has hydroxy groups, the hydroxy value is preferably higher than 1,000 and at most 2,000 mgKOH/g, particularly preferably from 1,100 to 1,800 mgKOH/g.

The total amount of the crosslinking agent (E) used is preferably from 0.1 to 20 parts by mass, more preferably from 0.2 to 15 parts by mass, particularly preferably from 0.3 to 10 parts by mass per 100 parts by mass of the total amount of the polyol (A) and another high-molecular-weight active hydrogen compound. When it is at least the lower limit of the above range, moderate hardness can be imparted to the flexible polyurethane foam, and the foaming behavior will be stable. When it is at most the upper limit of the above range, flexibility can be imparted to the flexible polyurethane foam, and mechanical properties such as tear strength, tensile strength and elongation will be good.

In a case where the first crosslinking agent (E1) and the second crosslinking agent (E2) are used in combination as the crosslinking agent (E), the mass ratio (E1)/(E2) of the first crosslinking agent (E1) to the second crosslinking agent (E2) is preferably from 90/10 to 10/90, particularly preferably from 90/10 to 50/50.

<Cell opener (F)>

In the present invention, as the case requires, a cell opener (F) may be used. A cell opener is a component to lower the closed cell ratio by breaking some of cells of a flexible polyurethane foam. By using the cell opener (F), an effect such as adjustment of the air flow of a flexible polyurethane foam depending on the purpose can be obtained.

In the present invention, as the cell opener, a polyoxyalkylene polyol obtainable by means of a step of subjecting ethylene oxide to ring-opening addition polymerization to an initiator or a step of subjecting a mixture of ethylene oxide with propylene oxide to ring-opening addition polymerization to an initiator, and which has an average of from 2 to 8 hydroxy groups, a hydroxy value of from 20 to 200 mgKOH/g and an oxyethylene group content of from 50 to 100 mass% is used.

The average number of hydroxy groups is more preferably from 2 to 6. The hydroxy value is more preferably from 24 to 150 mgKOH/g, further preferably from 24 to 100 mgKOH/g, particularly preferably from 24 to 60 mgKOH/g. The content of the oxyethylene groups in the cell opener (F) is a value per 100 mass% of the polyoxyalkylene polyol as the cell opener (F), and it is particularly preferably from 50 to 90 mass%.

The total amount of the cell opener (F) used is preferably from 0.1 to 10 parts by mass, more preferably from 0.1 to 7 parts by mass, particularly preferably from 0.1 to 5 parts by mass per 100 parts by mass of the total amount of the polyol (A) and another high-molecular-weight active hydrogen compound.

<Foam stabilizer (G)>

In the present invention, as the case requires, a foam stabilizer may be used. A foam stabilizer is a component to form favorable cells. The foam stabilizer may, for example, be a silicone type foam stabilizer or a fluorine type foam stabilizer. The amount of the foam stabilizer used is preferably from 0.1 to 10 parts by mass, particularly preferably from 0.1 to 5 parts by mass per 100 parts by mass of the total amount of the polyol (A) and another high-molecular-weight active hydrogen compound.

<Other compounding ingredients>

In addition to the above components, other compounding ingredients optionally used may, for example, be a filler, a stabilizer, a colorant and a flame retardant. They may be selected from known ones.

<Process for producing flexible polyurethane foam>

The flexible polyurethane foam of the present invention is produced by reacting and foaming and curing a reactive mixture containing the polyol (A), the polyisocyanate compound (B), the catalyst (C) and the blowing agent (D).

The method of foaming and curing the reactive mixture may be a method in which the reactive mixture is foamed and cured in a closed mold (a molding method) or a method in which the reactive mixture is foamed in an open system (a slab method).

MOLDING METHOD

As the molding method, preferred is a method of directly injecting the reactive mixture into a closed mold (a reaction-injection molding method) or a method in which the reactive mixture is injected into a mold in an open state, followed by closing. As the latter method, it is preferably carried out by a method of injecting the reactive mixture into a mold by using a low pressure foaming machine or a high pressure foaming machine.

The high pressure foaming machine is preferably of a type to mix two liquids. One of the two liquids is the polyisocyanate compound (B) and the other liquid is a mixture of all components other than the polyisocyanate compound (B). Depending on a case, it may be a type to mix three liquids by having the catalyst (C) or the cell opener as a separate component (which is usually used as dispersed or dissolved in a part of a high-molecular-weight polyol).

The temperature of the reactive mixture to be injected into the mold is preferably from 10 to 40°C. When the temperature is at least 10°C, the viscosity of the reactive mixture will not be so high, whereby liquid mixing of the liquids tends to be good. When the temperature is at most 40°C, the reactivity will not be too high, whereby the moldability or the like tends to be good.

The mold temperature is preferably from 10°C to 80°C, particularly preferably from 30°C to 70°C.

The curing time is preferably from 1 to 20 minutes, more preferably from 1 to 10 minutes, particularly preferably from 1 to 7 minutes. When the curing time is at least the lower limit of the above range, curing will be sufficiently conducted. When the curing time is at most the upper limit of the above range, productivity will be good.

SLAB METHOD

The slab method may be a known method such as a one shot method, a semiprepolymer method or a prepolymer method. For the production of the flexible polyurethane foam, it is possible to use a known production apparatus.

According to the production process of the present invention, as described in the after-mentioned Examples, by using the polyol (A1) as the polyol (A) to be reacted with the polyisocyanate compound (B) in production of a flexible polyurethane foam, shrinkage of the flexible polyurethane foam will be reduced. Further, the tear strength, the tensile strength and the elongation of the flexible polyurethane foam will be improved, and a flexible polyurethane foam excellent in mechanical properties is obtained. Particularly as the tear strength, the tensile strength and the elongation at the skin portion are favorably improved, when such a flexible polyurethane foam is used as a seat cushion for an automobile or a furnishing cushion, deterioration of the flexible polyurethane foam due to movement of the user will be suppressed.

Further, in a method of foaming and curing in a state where a nonwoven fabric (hereinafter sometimes referred to as "TAFNEL (registered trademark)" is disposed in a mold for molding, when a flexible polyurethane foam integrated with TAFNEL is to be produced, by using the polyol (A1) as the polyol (A), the dispersion of the density in the foam height direction (thickness direction) can be reduced. This is considered to be because impregnation of TAFNEL with the reactive mixture is suppressed. That is, as TAFNEL is heavily impregnated with the reactive mixture in a conventional method, the density of the flexible polyurethane foam in the vicinity of TAFNEL tends to be small, whereby the difference with the density at the core portion tends to be large. Whereas, with respect to a flexible polyurethane foam obtainable by the present invention, as impregnation of TAFNEL with the reactive mixture is suppressed, the density of the flexible polyurethane foam in the vicinity of TAFNEL will not be low, and the difference with the density at the core portion tends to be small. When dispersion of the density in the foam height direction (thickness direction) is small, the foam is likely to be light in weight, and deterioration of the flexible polyurethane foam will be suppressed.

Further, by using the polyol (A1) as the polyol (A), while durability and vibration properties required for a seat cushion for an automobile are maintained for example, reduction in thickness or weight saving of the urethane foam can be achieved.

The thickness of the foam is properly selected depending on the foaming method of the foam and the purpose of use of the foam, and for an application to a seat cushion for an automobile, with a view to securing the car interior space and in view of weight saving of the seat cushion, the thickness of the foam is preferably from 120 to 10 mm, and it is preferably from 250 to 15 mm for the application to a head rest, and is preferably from 300 to 10 mm for the application to a mattress.

The flexible polyurethane foam to be produced by the process of the present invention can be used for an interior material for an automobile (such as seat cushions, seat back rests, head rests or arm rests), an interior material for a railway vehicle, bedding, a furnishing cushion (such as a mattress, a sofa, a chair cushion), etc.

It is particularly suitable for a seat cushion for an automobile or a furnishing cushion, since it has excellent mechanical properties, and impregnation of a nonwoven fabric at the time of foaming is suppressed.

## EXAMPLES

Now, the present invention will be described in further detail with reference to Examples, but it should be understood that the present invention is by no means limited thereto.

Measurements were carried out by the following methods.

### (HYDROXY VALUE)

The hydroxy values of polyols other than the polymer-dispersed polyol were measured in accordance with JIS K 1557 (2007 edition) (titration method).

If the hydroxy value of the polymer-dispersed polyol is measured by the titration method, the measurement tends to be hindered by a resin precipitation, and therefore, it was obtained by measuring the polymerization balance by calculation in accordance with the above formula (1).

### (NUMBER AVERAGE MOLECULAR WEIGHT AND MASS AVERAGE MOLECULAR WEIGHT)

The number average molecular weight (Mn) and the mass average molecular weight (Mw) were measured by the following process.

With respect to some types of monodispersed polystyrene polymers having different polymerization degrees, which are commercially available as standard samples for molecular weight measurement, GPC was measured by using a commercially available GPC measuring device (HLC-8220GPC, manufactured by Tosoh Corporation), and based on the relation of the molecular weight and the maintaining retention time of each polystyrene, a calibration curve was prepared.

A sample was diluted by tetrahydrofuran to 0.5 mass% and passed through a filter of 0.5 $\mu$m, and GPC of the sample was measured by using the GPC measuring device.

By using the calibration curve, the GPC spectrum of a sample was analyzed by a computer, whereby the number average molecular weight (Mn) and the mass average molecular weight (Mw) of the sample were obtained.

The respective components as identified in Tables 1 and 2 are described below.

### PREPARATION EXAMPLE 1: Preparation of TBA-DMC Catalyst

A zinc hexacyanocobaltate complex (DMC catalyst) having tert-butyl alcohol (hereinafter referred to as TBA) coordinated was prepared as follows.

In a 500 mL flask, an aqueous solution comprising 10.2 g of zinc chloride and 10 g of water was put. While the zinc chloride aqueous solution was stirred at 300 revolutions per minute, an aqueous solution comprising 4.2 g of potassium hexacyanocobaltate ($K_3Co(CN)_6$) and 75 g of water was dropwise added to the zinc chloride aqueous solution over a period of 30 minutes. During the dropwise addition, the mixed solution in the flask was kept at 40°C.

After completion of dropwise addition of the potassium hexacyanocobaltate aqueous solution, the mixture in the flask was stirred further for 30 minutes, and a mixture comprising 80 g of tert-butyl alcohol, 80 g of water and 0.6 g of the polyol P was added, followed by stirring at 40°C for 30 minutes and at 60°C further for 60 minutes.

The polyol P is a polyoxypropylene diol having an average of 2 hydroxy groups per molecule and a number average molecular weight (Mn) of 2,000, obtained by subjecting propylene oxide (hereinafter sometimes referred to as "PO") to ring-opening addition polymerization to propylene glycol in the presence of a potassium hydroxide catalyst, followed by dealkalization purification.

The obtained mixture was subjected to filtration using a circular filter plate having a diameter of 125 mm and a quantitative filter paper for particles (manufactured by ADVANTEC Toyo Kaisha, Ltd., No. 5C) under elevated pressure (0.25 MPa) to obtain a solid (cake) containing a double metal cyanide complex catalyst.

The cake was put in a flask, a mixed liquid comprising 36 g of TBA and 84 g of water was added, followed by stirring for 30 minutes, and the mixture was subjected to filtration under elevated pressure under the same conditions as above to obtain a cake.

The cake was put in a flask, and a mixed liquid comprising 108 g of TBA and 12 g of water was further added, followed by stirring for 30 minutes to obtain a slurry having the double metal cyanide complex catalyst dispersed in the TBA-water mixed liquid. 120 g of the polyol P was added to the slurry, and volatile components were distilled off under reduced pressure at 80°C for 3 hours and at 115°C further for 3 hours to obtain a DMC catalyst in the form of a slurry (TBA-DMC catalyst). The concentration (active ingredient concentration) of the DMC catalyst (solid catalyst component) contained in the slurry was 5.33 mass%.

PREPARATION EXAMPLE 2: Preparation of ETB-DMC catalyst

A zinc hexacyanocobaltate complex (DMC catalyst) having ethylene glycol mono-tert-butyl ether (hereinafter referred to as EGMTBE) coordinated was prepared as follows.

In 15 ml of an aqueous solution containing 10 g of zinc chloride, 80 ml of an aqueous solution containing 4 g of $K_3Co(CN)_6$ was dropwise added over a period of 30 minutes. During the dropwise addition, the reaction solution was warmed at 40°C and stirred. After completion of the dropwise addition, a mixture comprising 80 ml of EGMTBE as the organic ligand and 80 ml of water was added, and the mixture was heated to 60°C. After stirring for 1 hour, filtration operation was carried out to obtain a cake containing a double metal cyanide complex.

Then, to the cake containing a double metal cyanide complex, a mixture comprising 40 ml of EGMTBE and 80 ml of water was added, followed by stirring for 30 minutes, and the mixture was subjected to filtration. To a cake containing a double metal cyanide complex obtained by the filtration operation, 100 ml of EGMTBE was further added, followed by stirring, and filtration operation was carried out. A cake containing a double metal cyanide complex obtained by the filtration operation was dried at 80°C and pulverized to obtain a powdery DMC catalyst (ETB-DMC catalyst).

PRODUCTION EXAMPLE 1: Production of polyol (A1-1)

The initiator (a1) used in this Example was a polyoxypropylene triol having a number average molecular weight (Mn) of 1,500 and a hydroxy value of 112 mgKOH/g, prepared by subjecting PO to ring-opening addition polymerization to glycerin using a potassium hydroxide (KOH) catalyst, followed by purification by using KYOWAAD 600S (trade name, synthetic adsorbent, manufactured by Kyowa Chemical Industry Co., Ltd.).

As the pressure resistant reactor, a pressure resistant reactor (capacity: 10 L, diameter: 200 mm, height: 320 mm) made of stainless steel (JIS-SUS-316) equipped with a stirrer having one pair of anchor blades and two pairs of 45° inclined two-plate paddle blades attached, and having a condenser tube through which cooling water flows provided in the interior of the container, was used.

As measurement of the temperature of the reaction liquid, the liquid temperature was measured by a thermometer placed at the lower portion in the interior of the pressure resistant reactor.

First, into the pressure resistant reactor, 1,000 g of the initiator (a1) and the TBA-DMC catalyst slurry prepared in Preparation Example 1 were charged to obtain a reaction liquid. The amount of the TBA-DMC catalyst slurry charged was such an amount that the metal concentration (hereinafter referred to as the initial catalyst metal concentration) of the TBA-DMC catalyst in the reaction liquid became 46 ppm.

Then, the interior in the pressure resistant reactor was replaced with nitrogen, then the reaction liquid was heated with stirring, stirring was stopped when the liquid temperature reached 135°C (initial temperature), and while stirring was continued, 120 g (12 parts by mass per 100 parts by mass of the initiator) of PO was supplied into the pressure resistant reactor at a rate of 600 g/hr and reacted.

When PO was supplied into the pressure resistant reactor (initiation of the step (a)), the internal pressure of the pressure resistant reactor was once increased and then gradually decreased, and it was confirmed to be the same internal pressure of the pressure resistant reactor immediately before supply of PO (completion of the step (a)). During this process, when the decrease in the internal pressure started, the temperature of the reaction liquid was once increased subsequently and then gradually decreased. The maximum temperature of the reaction liquid was 165°C. In this Example, after the temperature increase of the reaction liquid stopped, cooling was conducted. Further, the time for this step (a) was 30 minutes.

Then, PO was supplied and reacted (step (b)), and then ethylene oxide (hereinafter sometimes referred to as EO) was reacted (step (c)). That is, while the reaction liquid was stirred, the reaction liquid being cooled to 135°C was confirmed, and while the temperature of 135°C was maintained, 4,728 g of PO was supplied to the pressure resistant reactor at a rate of 600 g/hr. It was confirmed that the internal pressure no more changed and the reaction was completed (completion of the step (b)). Then, 20 g (active ingredient concentration to the final product: 0.3%) of potassium hydroxide was added, to carry out alkoxylation by dehydration at 120°C for 2 hours. Then, while the reaction liquid was maintained at 120°C, 950 g of EO was additionally supplied to the pressure resistant reactor at a rate of 200 g/hr. It was confirmed that the internal pressure no more changed and the reaction was completed (completion of the step (c)). Then, the operation of neutralizing and removing the catalyst was carried out by using KYOWAAD 600S (trade name, synthetic adsorbent, manufactured by Kyowa Chemical Industry Co., Ltd.).

Of the polyol polyol (A1-1) thus obtained, the average number of hydroxy groups was 3, the hydroxy value was 16.8 mgKOH/g, the number average molecular weight (Mn) was 13,228, the degree of unsaturation was 0.007 meq/g, the molecular weight distribution (Mw/Mn) was 1.045, and the oxyethylene groups were present only at the terminals and their content was 14 mass%.

PRODUCTION EXAMPLE 2: Production of polyol (A1-2)

In the same reactor as in Production Example 1, 2,500 g of the initiator (a1) and the TBA-DMC catalyst slurry prepared in Preparation Example 1 in such an amount that the initial catalyst metal concentration became 46 ppm were charged. Then, the interior in the pressure resistant reactor was replaced with nitrogen, the reaction liquid was heated with stirring, and heating was stopped when the temperature reached 135°C (initial temperature), and while stirring was continued, 250 g (10 parts by mass per 100 parts by mass of the initiator) of PO was supplied to the pressure resistant reactor at a rate of 500 g/hr and reacted. The maximum temperature of the reaction liquid was 166°C.

When PO was supplied to the pressure resistant reactor (initiation of the step (a)), the internal pressure of the pressure resistant reactor was once increased and then gradually decreased, and it was confirmed that the internal pressure became the same as the internal pressure of the pressure resistant reactor immediately before the supply of PO (completion of the step (a)). During this process, once the decrease in the internal pressure started, the temperature of the reaction liquid was once increased subsequently and then gradually decreased.

Then, after PO was supplied and reacted, a mixture of PO and EO was reacted (step (b)), and then EO was further reacted (step (c)). That is, while the reaction liquid was stirred, the reaction liquid being cooled to 135°C was confirmed, and while the temperature was maintained at 135°C, 1,588 g of PO was supplied to the pressure resistant reactor at a rate of 500 g/hr. After it was confirmed that the internal pressure no more changed and the reaction was completed, a mixture comprising 1,060 g of PO and 233 g of EO was charged at a rate of 500 g/hr, followed by stirring at 135°C for 10 hours to carry out reaction until the internal pressure no more changed (completion of the step (b)). Further, 20 g (active ingredient concentration based on final product: 0.3%) of a potassium hydroxide catalyst was added to carry out alkoxylation by dehydration at 120°C for two hours. Then, while the reaction liquid was maintained at 120°C, 1,088 g of EO was supplied to the pressure resistant reactor at a rate of 200 g/hr. It was confirmed that the internal pressure no more changed and the reaction was completed (completion of the step (c)). Then, the operation of neutralizing and removing the catalyst was carried out by using KYOWAAD 600S (trade name, synthetic adsorbent, manufactured by Kyowa Chemical Industry Co., Ltd.).

Of the obtained polyol (A1-2), the average number of hydroxy groups was 3, the hydroxy value was 42.0 mgKOH/g, the number average molecular weight (Mn) was 6,035, the degree of unsaturation was 0.007 meq/g, the molecular weight distribution (Mw/Mn) was 1.037, the terminal oxyethylene group content was 16 mass%, and the total oxyethylene group content including the terminal oxyethylene groups was 19.5 mass%.

PRODUCTION EXAMPLE 3: Production of polyol (A1-3)

In the same reactor as in Production Example 1, 2,000 g of the initiator (a1) and the TBA-DMC catalyst slurry prepared in Preparation Example 1 in such an amount that the initial catalyst metal concentration became 46 ppm were charged. Then, the interior in the pressure resistant reactor was replaced with nitrogen, and the reaction liquid was heated with stirring, heating was stopped when the temperature reached 135°C (initial temperature), and while stirring was continued, 150 g (7.5 parts by mass per 100 parts by mass of the initiator) of PO was supplied to the pressure resistant reactor at a rate of 500 g/hr and reacted. The maximum temperature of the reaction liquid was 165°C.

When PO was supplied to the pressure resistant reactor (initiation of the step (a)), the internal pressure of the pressure resistant reactor was once increased and then decreased, and it was confirmed that the internal pressure became the same as the internal pressure of the pressure resistant reactor immediately before the supply of PO (completion of the step (a)). During this process, once the decrease in the internal pressure started, the temperature of the reaction liquid was once increased subsequently and then gradually decreased.

Then, PO was supplied and reacted, a mixture of PO and EO was reacted (step (b)), and then EO was further reacted (step (c)). That is, while the reaction liquid was stirred, the reaction liquid being cooled to 135°C was confirmed, and while the reaction liquid was maintained at 135°C, 1,355 g of PO was supplied to the pressure resistant reactor at a rate of 500 g/hr. After it was confirmed that the internal pressure no more changed and the reaction was completed, a mixture comprising 1,926 g of PO and 238 g of EO was charged at a rate of 500 g/hr, followed by stirring at 135°C for 10 hours to carry out reaction until the internal pressure no more changed (completion of the step (b)). Further, 20 g (active ingredient concentration based on final product: 0.3%) of a potassium hydroxide catalyst was added, to carry out alkoxylation by dehydration at 120°C for two hours. Then, while the reaction liquid was maintained at 120°C, 1,088 g of EO was additionally supplied to the pressure resistant reactor at rate of 200 g/hr. After it was confirmed that the internal pressure no more changed and the reaction was completed, the operation of neutralizing and removing the catalyst was carried out by using KYOWAAD 600S (trade name, synthetic adsorbent, manufactured by Kyowa Chemical Industry Co., Ltd.).

Of the obtained polyol (A1-3), the average number of hydroxy groups was 3, the hydroxy value was 33.7 mgKOH/g, the number average molecular weight (Mn) was 7,186, the degree of unsaturation was 0.007 meq/g, the molecular weight distribution (Mw/Mn) was 1.048, the terminal oxyethylene group content was 16 mass%, and the total oxyethylene group content including the terminal oxyethylene groups was 19.5 mass%.

PRODUCTION EXAMPLE 4: Production of polyol (A1-4)

The initiator (a2) used in this Example was prepared by subjecting PO to ring-opening addition polymerization to pentaerythritol using a potassium hydroxide (KOH) catalyst, followed by purification by using KYOWAAD 600S (trade name, synthetic adsorbent, manufactured by Kyowa Chemical Industry Co., Ltd.). It is a polyoxypropylene polyol having a number average molecular weight (Mn) of 1,200 and a hydroxy value of 187 mgKOH/g.

A polyol (A1-4) was produced in the same manner as in Production Example 1 except that to the same reactor as in Production Example 1, 667 g of the initiator (a2) and the TBA-DMC catalyst slurry in such an amount that the initial catalyst metal concentration became 46 ppm were charged, in the step (a), the PO supply amount was 93 g (14 parts by mass per 100 parts by mass of the initiator), the PO supply rate was 600 g/hr, the initial temperature was 135°C, and the maximum temperature was 166°C, in the step (b), the PO supply amount was 5,380 g, and the PO supply rate was 600 g/hr, and in the following step (c), the EO supply amount was 763 g, and the EO supply rate was 200 g/hr.

Of the obtained polyol (A1-4), the average number of hydroxy groups was 3, the hydroxy value was 18.7 mgKOH/g, the number average molecular weight (Mn) was 15,088, the molecular weight distribution was 1.077, the degree of unsaturation was 0.007 meq/g, the terminal oxyethylene group content was 11 mass%, and the oxyethylene groups were present only at the terminals, and their content was 11 mass%.

PRODUCTION EXAMPLE 5: Production of polyol (A1-5)

The initiator (a2) used in this Example was prepared by subjecting PO to ring-opening addition polymerization to pentaerythritol using a potassium hydroxide (KOH) catalyst, followed by purification by using KYOWAAD 600S (trade name, synthetic adsorbent, manufactured by Kyowa Chemical Industry Co., Ltd.). It is a polyoxypropylene polyol having a number average molecular weight (Mn) of 1,200 and a hydroxy value of 187 mgKOH/g.

A polyol (A1-5) was produced in the same manner as in Production Example 1 except that to the same reactor as in Production Example 1, 571 g of the initiator (a2) and the TBA-DMC catalyst slurry in such an amount that the initial catalyst metal concentration became 46 ppm were charged, in the step (a), the PO supply amount was 91 g (16 parts by mass per 100 parts by mass of the initiator), the PO supply rate was 600 g/hr, the initial temperature was 135°C, and the maximum temperature was 166°C, in the step (b), the PO supply amount was 5,551 g, and the PO supply rate was 600 g/hr, and in the following step (c), the EO supply amount was 693 g, and the EO supply rate was 200 g/hr.

Of the obtained polyol (A1-5), the average number of hydroxy groups was 4, the hydroxy value was 16 mgKOH/g, the number average molecular weight (Mn) was 16,844, the molecular weight distribution was 1.104, the degree of unsaturation was 0.008 meq/g, and the oxyethylene groups were present only at the terminals, and their content was 10 mass%.

PRODUCTION EXAMPLE 6: Production of polyol (A1-6)

The initiator (a3) used in this Example was prepared by subjecting PO to ring-opening addition polymerization to sorbitol using a potassium hydroxide (KOH) catalyst, followed by purification by using KYOWAAD 600S (trade name, synthetic adsorbent, manufactured by Kyowa Chemical Industry Co., Ltd.). It is a polyoxypropylene polyol having a number average molecular weight (Mn) of 2,900 and a hydroxy value of 116 mgKOH/g.

A polyol (A1-6) was produced in the same manner as in Production Example 1 except that to the same reactor as in Production Example 1, 967 g of the initiator (a3) and the TBA-DMC catalyst slurry in such an amount that the initial catalyst metal concentration became 46 ppm were charged, in the step (a), the PO supply amount was 116 g (12 parts by mass per 100 parts by mass of the initiator), the PO supply rate was 600 g/hr, the initial temperature was 135°C, and the maximum temperature was 167°C, in the step (b), the PO supply amount was 5,409 g, and the PO supply rate was 600 g/hr, and in the following step (c), the EO supply amount was 733 g, and the EO supply rate was 200 g/hr.

Of the obtained polyol (A1-6), the average number of hydroxy groups was 6, the hydroxy value was 16.8 mgKOH/g, the number average molecular weight (Mn) was 20,856, the molecular weight distribution was 1.060, the degree of unsaturation was 0.008 meq/g, and the oxyethylene groups were present only at the terminals, and their content was 10 mass%.

PRODUCTION EXAMPLE 7: Production of polyol (A1-7)

PO was subjected to ring-opening addition polymerization to the initiator (a4) in the presence of the ETB-DMC catalyst prepared in Preparation Example 2, and then a mixture of PO and EO was subjected to ring-opening addition polymerization, and EO was further subjected to ring-opening addition polymerization.

The initiator (a4) used in this Example was prepared by subjecting PO to ring-opening addition polymerization to glycerin using a potassium hydroxide (KOH) catalyst, followed by purification by using KYOWAAD 600S (trade name, synthetic adsorbent, manufactured by Kyowa Chemical Industry Co., Ltd.). It is a polyoxypropylene triol having a number average molecular weight (Mn) of 1,000 and a hydroxy value of 168 mgKOH/g.

In the same reactor as in Production Example 1, 953 g of the initiator (a4) and 1.33 g (active ingredient concentration based on final product: 0.02%) of the ETB-DMC catalyst powder were charged.

After the interior in the reactor was replaced with nitrogen, the reaction liquid was heated with stirring, and heating was stopped when the temperature reached 120°C (initial temperature), and while stirring was continued, 95 g (10 parts by mass per 100 parts by mass of the initiator) of PO in the step (a) was supplied and reacted. The maximum temperature of the reaction liquid was 160°C. After the temperature increase of the reaction liquid was stopped, cooling was conducted.

After completion of the step (a), 1,221 g of PO was charged, followed by stirring at 130°C for 5 hours to carry out ring-opening addition polymerization. Then, a mixture comprising 3,180 g of PO and 353 g of EO was charged, followed by stirring at 130°C for 10 hours to carry out ring-opening addition polymerization.

After completion of the step (b), 20 g (active ingredient concentration based on final product: 0.3%) of a potassium hydroxide catalyst and 1,201 g of EO were charged, followed by stirring at 110°C for 1.5 hours to carry out ring-opening addition polymerization thereby to obtain a polyol (A1-7).

Of the obtained polyol (A1-7), the average number of hydroxy groups was 3, the hydroxy value was 24 mgKOH/g, the number average molecular weight (Mn) was 8,663, the molecular weight distribution (Mw/Mn) was 1.112, the degree of unsaturation was 0.019 meq/g, the oxyethylene group content of the random chain of EO and PO was 5 mass%, the terminal oxyethylene group content was 17 mass%, and the total oxyethylene group content including the terminal oxyethylene groups was 22 mass%.

PRODUCTION EXAMPLE 8: Production of polyol (A1-4)

A polyol (A1-8) was produced in the same manner as in Production Example 1 except that to the same reactor as in Production Example 1, 1,000 g of the initiator (a2) and the TBA-DMC catalyst slurry in such an amount that the initial catalyst metal concentration became 46 ppm were charged, in the step (a), the PO supply amount was 100 g (10 parts by mass per 100 parts by mass of the initiator), the PO supply rate was 600 g/hr, the initial temperature was 135°C, and the maximum temperature was 165°C, in the step (b), the PO supply amount was 4,794 g, and the PO supply rate was 600 g/hr, and in the following step (c), the EO supply amount was 884 g, and the EO supply rate was 200 g/hr.

Of the obtained polyol (A1-8), the average number of hydroxy groups was 3, the hydroxy value was 28 mgKOH/g, the number average molecular weight (Mn) was 10,553, the molecular weight distribution was 1.067, the degree of unsaturation was 0.008 meq/g, and the oxyethylene groups were present only at the terminals, and their content was 13 mass%.

PRODUCTION EXAMPLE 9: Production of polyol (A1-9)

A polyol (A1-9) was produced in the same manner as in Production Example 1 except that to the same reactor as in Production Example 1, 1,173 g of the initiator (a1) and the TBA-DMC catalyst slurry in such an amount that the initial catalyst metal concentration became 46 ppm were charged, in the step (a), the PO supply amount was 117 g (10 parts by mass per 100 parts by mass of the initiator), the PO supply rate was 600 g/hr, the initial temperature was 135°C, and the maximum temperature was 164°C, in the step (b), the PO supply amount was 4,794 g, and the PO supply rate was 600 g/hr, and in the following step (c), the EO supply amount was 797 g, and the EO supply rate was 200 g/hr.

Of the obtained polyol (A1-9), the average number of hydroxy groups was 3, the hydroxy value was 19.8 mgKOH/g, the number average molecular weight (Mn) was 10,470, the molecular weight distribution was 1.074, the degree of unsaturation was 0.0013 meq/g, and the oxyethylene groups were present only at the terminals, and their content was 11.5 mass%.

PRODUCTION EXAMPLE 10: Production of polyol (A1-10)

A polyol (A1-10) was produced in the same manner as in Production Example 9 except that to the same reactor as in Production Example 9, 1,172 g of the initiator (a1) and the TBA-DMC catalyst slurry in such an amount that the initial catalyst metal concentration became 46 ppm were charged, in the step (a), the PO supply amount was 117 g (10 parts by mass per 100 parts by mass of the initiator), the PO supply rate was 600 g/hr, the initial temperature was 135°C, and the maximum temperature was 164°C, in the step (b), the PO supply amount was 4,793 g, and the PO supply rate was 300 g/hr, and in the following step (c), the EO supply amount was 799 g, and the EO supply rate was 200 g/hr.

Of the obtained polyol (A1-10), the average number of hydroxy groups was 3, the hydroxy value was 19.7 mgKOH/g, the number average molecular weight (Mn) was 10,552, the molecular weight distribution was 1.059, the degree of unsaturation was 0.0013 meq/g, and the oxyethylene groups were present only at the terminals, and their content was 11.5 mass%.

COMPARATIVE PRODUCTION EXAMPLE 1: Production of polyol (A2-1)

In this Example, PO was subjected to ring-opening addition polymerization to the initiator (a2) in the presence of a potassium hydroxide catalyst, and then EO was subjected to ring-opening addition polymerization.

In the same reactor as in Production Example 1, 1,000 g of the initiator (a2), 120 g (active ingredient concentration based on final product: 0.3%) of a potassium hydroxide catalyst and 5,664 g of PO were charged, followed by stirring at 120°C for 10 hours to carry out ring-opening addition polymerization. Then, 1,023 g of EO was charged, followed by stirring at 110°C for 1.5 hours to carry out ring-opening addition polymerization thereby to obtain a polyol (A2-1).

Of the obtained polyol (A2-1), the average number of hydroxy groups was 4, the hydroxy value was 28 mgKOH/g, the number average molecular weight (Mn) was 11,029, the degree of unsaturation was 0.065 meq/g, and the molecular weight distribution was 1.040, and the oxyethylene groups were present only at the terminals, and their content was 13 mass%.

COMPARATIVE PRODUCTION EXAMPLE 2: Production of polyol (A2-2)

In Production Example 1, the monomer supply amount in the step (a) was 60 g (6 parts by mass per 100 parts by mass of the initiator), and the step (a) was started in the same manner as in Production Example 1. The internal pressure of the pressure resistant reactor was once increased and then gradually decreased, and it was confirmed that the internal pressure became the same as the internal pressure of the pressure resistant reactor immediately before the supply of PO (completion of the step (a)). During this process, cooling of the reaction liquid was started when the temperature exceeded 137°C, but the temperature of the reaction liquid was once increased and then gradually decreased. The maximum temperature of the reaction liquid was 140°C. Then, ring-opening addition polymerization was carried out in the same manner as in Production Example 1.

Of the polyol (A2-2) thus obtained, the average number of hydroxy groups was 3, the hydroxy value was 16.8, the number average molecular weight (Mn) was 12,877, the degree of unsaturation was 0.060 meq/g, and the molecular weight distribution (Mw/Mn) was 1.055, and the oxyethylene groups were present only at the terminals, and their content was 14 mass%.

[Polymer-dispersed polyol (A21-1)]

A polymer-dispersed polyol (A21-1) having a hydroxy value of 24 mgKOH/g, obtainable by polymerizing 77.5 mass% of acrylonitrile and 22.5 mass% of styrene in a base polyol having an average of 3 hydroxy groups and a hydroxy value of 34 mgKOH/g and containing 14.5 mass% of oxyethylene groups at its terminals, was used.

The base polyol is one obtained by subjecting PO to ring-opening addition polymerization to the initiator (a3) in the presence of a potassium hydroxide catalyst and then subjecting EO to ring-opening addition polymerization. The initiator (a3) is a polyoxyalkylene polyol having a number average molecular weight (Mn) of 1,300, obtained by subjecting PO to ring-opening addition polymerization to glycerin using a potassium hydroxide catalyst.

That is, in the same reactor as in Production Example 1, 1,767 g of the initiator (a3), 20 g (active ingredient concentration based on final product: 0.3%) of a potassium hydroxide catalyst and 4,641 g of PO were charged, followed by stirring at 120°C for 8 hours to carry out ring-opening addition polymerization. Then, 1,141 g of EO was further charged, followed by stirring at 110°C for 1.5 hours to carry out ring-opening addition polymerization, and the obtained polyoxypropylene oxyethylene polyol was used as the base polyol.

[Crosslinking agent (E1-1)]

A mixture having a polyoxypropylene oxyethylene polyol (e1-1) having an average of 6 hydroxy groups and a hydroxy value of 445 mgKOH/g and containing 10 mass% of oxyethylene groups at its terminals and a polyoxypropylene oxyethylene polyol (e1-2) having an average of 6 hydroxy groups and a hydroxy value of 445 mgKOH/g and containing 46 mass% of polyoxyethylene groups at its terminals, mixed in a mass ratio (e1-1)/(e1-2) = 5/5.

[Crosslinking agent (E1-2)]

A polyoxyalkylene polyol having an average of 4 hydroxy groups and a hydroxy value of 562 mgKOH/g, obtained by subjecting PO to ring-opening addition polymerization to pentaerythritol using potassium hydroxide as a catalyst.

[Crosslinking agent (E1-3)]

A polyoxypropylene oxyethylene polyol having an average of 6 hydroxy groups and a hydroxy value of 450 mgKOH/g and containing 46 mass% of polyoxyethylene groups at its terminals.

[Crosslinking agent (E2-1)]

Diethanolamine

[Crosslinking agent (E2-2)]

Glycerin

[Cell opener (F-1)]

A polyoxyalkylene polyol having an average of 3 hydroxy groups, a hydroxy value of 48 mgKOH/g, and an oxyethylene group content of 80 mass%, obtained by subjecting a mixture of PO/EO to ring-opening addition polymerization to glycerin using potassium hydroxide as a catalyst.

[Cell opener (F-2)]

A polyoxyalkylene polyol having an average of 2 hydroxy groups, a hydroxy value of 56 mgKOH/g, and an oxyethylene group content of 80 mass%, obtained by subjecting a mixture of PO/EO to ring-opening addition polymerization to dipropylene glycol using potassium hydroxide as a catalyst.

[Catalyst (C-1)]

A dipropylene glycol (DPG) solution containing 33 mass% of triethylenediamine (manufactured by Tosoh Corporation, trade name: TEDA L33).

[Catalyst (C-2)]

A DPG solution containing 70 mass% of bis-(2-dimethylaminoethyl)ether (manufactured by Tosoh Corporation, trade name: TOYOCAT ET).

[Catalyst (C-3)]

1-(dimethylaminoethyl)-4-methylpiperazine (manufactured by Tosoh Corporation, trade name: TOYOCAT-NP).

[Foam stabilizer (G-1)]

A silicone foam stabilizer, trade name: SZ-1325 (manufactured by Dow Corning Toray Co., Ltd.).

[Foam stabilizer (G-2)]

A silicone foam stabilizer, trade name: SZ-1327 (manufactured by Dow Corning Toray Co., Ltd.).

[Foam stabilizer (G-3)]

A silicone foam stabilizer, trade name: SZ-1346 (manufactured by Dow Corning Toray Co., Ltd.).

[Foam stabilizer (G-4)]

A silicone foam stabilizer, trade name: SF-2962 (manufactured by Dow Corning Toray Co., Ltd.).

[Foam stabilizer (G-5)]

A silicone foam stabilizer, trade name: SZ-1333 (manufactured by Dow Corning Toray Co., Ltd.).

[Foam stabilizer (G-6)]

A silicone foam stabilizer, trade name: L-5309 (manufactured by MOMENTIVE).

[Foam stabilizer (G-7)]

A silicone foam stabilizer, trade name: SZ-3601 (manufactured by Dow Corning Toray Co., Ltd.).

[Blowing agent (D)]

Water

[Polyisocyanate compound (B-1)]

A mixture comprising 80 mass% of TDI-80 (a mixture of 2,4-TDI and 2,6-TDI in an isomeric ratio of 80 mass% to 20 mass%) and 20 mass% of polymethylene polyphenyl polyisocyanate (common name: polymeric MDI), trade name: Coronate 1021 (manufactured by Nippon Polyurethane Industry Co., Ltd.).

[Polyisocyanate compound (B-2)]

TDI-80 (a mixture of 2,4-TDI and 2,6-TDI in an isomeric ratio of 80 mass% to 20 mass%) (manufactured by Nippon Polyurethane Industry Co., Ltd.).

[Polyisocyanate compound (B-3)]

A mixture comprising 50 parts by mass of 4,4'-diphenylmethane diisocyanate (MDI) and 50 parts by mass of 2,4'-MDI, trade name: LUPRANATE MI (manufactured by BASF Corporation).

[Polyisocyanate compound (B-4)]

Polymethylene polyphenyl polyisocyanate (Polymeric MDI), trade name: Millionate MR-200 (manufactured by Nippon Polyurethane Industry Co., Ltd.).

[Polyisocyanate compound (B-5)] MM103

Carbodiimide-modified diphenylmethane diisocyanate, trade name: LUPRANATE MM103 (manufactured by BASF Corporation).

<Production of flexible polyurethane foam>

EXAMPLES 1 and 2

A flexible polyurethane foam was produced in a blend ratio as identified in Table 1. Example 1 is an Example of the present invention, and Example 2 is a Comparative Example.

The units in the blend ratio in Table 1 are parts by mass except for the isocyanate index.

First, predetermined amounts of the respective components excluding the polyisocyanate compound (B) among the components as identified in Table 1 were weighed in a plastic container having a capacity of 2 L, and they were stirred and mixed by using a mixer equipped with stirring blades at a rate of 3,000 revolutions per minute for 30 seconds to prepare a polyol system solution.

Then, a predetermined amount of the polyisocyanate compound (B) was weighed in a plastic container having a capacity of 500 cc.

The above polyol system solution was adjusted to have a liquid temperature of 30°C and the polyisocyanate compound (B) was adjusted to have a liquid temperature of 25°C, and then the polyisocyanate compound (B) was charged into the polyol system solution and stirred and mixed by using the above mixer at a rate of 3,000 revolutions per minute for 5 seconds to prepare a reactive mixture. The reactive mixture immediately after preparation was put in an open-topped aluminum mold of 400 mm in length, 400 mm in width and 100 mm in thickness, adjusted to a mold temperature of 60°C, and the upper mold was quickly closed to carry out foaming and curing in a closed state. 6 Minutes after initiation of the molding, the upper mold was opened, and a flexible polyurethane foam was taken out and subjected to crushing and then left to stand in a room (temperature: 23°C, relative humidity: 50%) for 24 hours and then evaluated.

Crushing is a step of continuously compressing the flexible polyurethane foam after taken out from the mold up to 75% of the foam thickness.

Further, initiation of the molding means that stirring and mixing of the polyol system solution and the polyisocyanate compound (B) were started.

(Evaluation methods)

The density, the ILD hardness, the rebound resilience, the tear strength, the tensile strength and the elongation, and the compression set were measured by a method in accordance with JIS K6400 (1997 edition), the resonance frequency, the transmissibility at resonance frequency, the 6 Hz transmissibility and the 10 Hz transmissibility were measured by a method in accordance with JASO B8407-82 (the same applies hereinafter).

When the value of the resonance frequency is at most 5 Hz, when the flexible polyurethane foam is used as a foam for a seat cushion for an automobile, efficient damping of the vibration in a frequency region to which human is sensitive is taken, and good riding comfortability will be obtained.

With respect to the foam outer appearance, the finished foam was visually observed, and one which did not shrink and which maintained its shape was regarded as "good", one which shrank and could not maintain its shape was represented as "shrink", and one which significantly shrank was represented as "significant shrink".

TABLE 1

| | | | | Example 1 | Example 2 |
|---|---|---|---|---|---|
| Blend ratio of reactive mixture (parts by mass) | Polyol (A) | Polyol (A1-1) | | 60 | |
| | | Polyol (A2-2) | | | 60 |
| | | Polymer-dispersed polyol (A21-1) | | 40 | 40 |
| | Crosslinking agent (E) | Crosslinking agent (E1-1) | | 3 | 3 |
| | | Crosslinking agent (E2-1) | | 0.5 | 0.5 |
| | Cell opener (F) | Cell opener (F-1) | | 0.5 | 0.5 |
| | Amine catalyst (C) | Amine catalyst (C-1) | | 0.45 | 0.45 |
| | | Amine catalyst (C-2) | | 0.05 | 0.05 |
| | Foam stabilizer (G) | Foam stabilizer (G-1) | | 0.8 | 0.8 |
| | | Foam stabilizer (G-2) | | 0.2 | 0.2 |
| | Blowing agent (D) | Water | | 3 | 3 |
| | Polyisocyanate compound (B) | Polyisocyanate compound (B-1) | | 40.09 | 40.09 |
| | | Isocyanate index | | 105 | 105 |
| Foam physical properties | Foam outer appearance | | | Good | Significant shrink |
| | Density | Whole | $kg/m^3$ | 50.5 | Measurement impossible |
| | | Core | $kg/m^3$ | 45.8 | |
| | ILD hardness (25%) | | $N/314\ cm^2$ | 212 | |
| | Rebound resilience | Whole | % | 62 | |
| | | Core | % | 71 | |
| | Tear strength | | N/cm | 5.7 | |
| | Tensile properties | Tensile strength | KPa | 124.0 | |
| | | Elongation | % | 96 | |
| | Compression set | | % | 1.9 | |
| | Compression set under humid condition | | % | 8.8 | |
| | Vibration characteristics | Resonance frequency | Hz | 3.27 | |
| | | Transmissibility at resonance frequency | - | 3.62 | |
| | | 6 Hz transmissibility | - | 0.49 | |
| | | 10 Hz transmissibility | - | 0.11 | |

As shown in Table 1, the flexible polyurethane foam in Example 1 containing the polyol (A1) of the present invention in the polyol (A) had good foam outer appearance and foam physical properties and was suitable for a foam for a seat cushion for an automobile.

On the other hand, Example 2 is an Example in which another polyol (A2) different from (A1) in the method of controlling the temperature at the time of production was used instead of the polyol (A1) of the present invention, and the flexible polyurethane foam obtained in this Example shrank, and its physical properties could not be measured.

That is, reduction in shrinkage of the foam by use of the polyol (A1) of the present invention was confirmed.

EXAMPLES 11 to 18

Flexible polyurethane foams were produced in blend ratios (a) to (j) as identified in Table 2 and evaluated. Examples 12 to 18 are Examples of the present invention, and Example 11 is a Comparative Example. The units of the blend ratios as identified in Table 2 are parts by mass. The evaluation results are shown in Table 3.

A mixture prepared by weighing predetermined amounts of the respective components excluding the polyisocyanate compound (B) among the components as identified in Table 2, followed by stirring and mixing by using a mixture equipped with stirring blades, adjusted to a liquid temperature of 30°C, and a predetermined amount of the polyisocyanate compound (B) adjusted to a liquid temperature of 25°C, were mixed to prepare a reactive mixture. 670 g of the reactive mixture immediately after preparation was poured on a mold for a test piece of 400 mm in length, 400 mm in width and 100 mm in height, adjusted to a mold temperature of 60°C, and the upper lid was closed, followed by curing for 6 minutes to carry out foaming and curing.

The flexible foam thus obtained was taken out from the mold, subjected to crushing and left to stand in a room (temperature: 23°C, relative humidity: 50%) for 24 hours and then evaluated by the following method.

(Evaluation method)

In the same manner as in Example 1, of the flexible foam, the density, the ILD hardness, the rebound resilience, the resonance frequency, the transmissibility at resonance frequency, the 6 Hz transmissibility and the 10 Hz transmissibility were measured. Further, SAG-FACTOR which is a ratio of the 65% hardness to the 25% hardness was determined. The smaller this value is, the less the bottom-hitting feeling is likely to occur when the flexible polyurethane foam to be obtained is used for a seat cushion for an automobile.

As shown in Fig. 1, the obtained flexible polyurethane foam was sliced into 5 layers in a plane vertical to the height direction. In Fig. 1, the reference symbol 1 represents the obtained flexible polyurethane foam. That is, two layers each having a thickness of 20 mm were sliced from the foam surface on the mold lid side, and the layer closest to the lid side was regarded as the layer (1), and the layer under the layer (1) was regarded as the layer (2). Further, two layers each having a thickness of 20 mm were sliced from the foam surface on the mold bottom side, and the layer closest to the bottom side was regarded as the layer (5), and the layer on the layer (5) was regarded as the layer (4). The remaining layer is the layer (3). The thickness of the layer (3) is a thickness obtainable and is about 15 mm. The layer (5) is the skin layer.

With respect to the layers (1), (3) and (5), the tear strength, the tensile strength and the elongation, the compression set and the compression set under humid condition were measured. The tear strength, and the tensile strength and the elongation were measured after each layer was further sliced in a thickness of 10 mm. The compression set and the compression set under humid condition were measured in accordance with JIS K6400 (1997 edition) except that the thickness of the foam test sample was 20 mm.

The hysteresis loss was measured in accordance with JIS K6400 (1997 edition).

TABLE 2

| Blend Example | | | Blend (a) | Blend (b) | Blend (c) | Blend (d) | Blend (e) | Blend (f) | Blend (g) | Blend (h) | Blend (j) |
|---|---|---|---|---|---|---|---|---|---|---|---|
| Blend ratio of reactive mixture (parts by mass) | Polyol (A) | Polyol (A2-1) | 50 | | | | | | | | |
| | | Polyol (A1-1) | | 50 | 50 | 50 | 50 | 50 | | | |
| | | Polyol (A1-2) | | | | | | | 60 | | |
| | | Polyol (A1-3) | | | | | | | | 60 | 60 |
| | | Polymer-dispersed polyol (A21-1) | 50 | 50 | 50 | 50 | 50 | 50 | 40 | 40 | 40 |
| | Crosslinking agent (E) | Crosslinking agent (E1-1) | 3 | 3 | | 3 | | 3 | | | |
| | | Crosslinking agent (E1-2) | | | | | | | 3 | 3 | 2 |
| | | Crosslinking agent (E2-1) | 0.5 | 0.5 | | 0.5 | 0.5 | | 1 | 1 | 0.5 |
| | Cell opener (F) | Cell opener (F-1) | 0.5 | 0.5 | 0.5 | | 0.5 | 0.5 | | | |
| | Catalyst (C) | Catalyst (C-1) | 0.45 | 0.45 | 0.45 | 0.45 | 0.45 | 0.45 | 0.45 | 0.45 | 0.65 |
| | | Catalyst (C-2) | 0.05 | 0.05 | 0.05 | 0.05 | 0.05 | 0.05 | 0.1 | 0.1 | 0.1 |
| | Foam stabilizer (G) | Foam stabilizer (G-1) | | | | | | | 0.2 | 0.2 | |
| | | Foam stabilizer (G-2) | 1 | 1 | 0.2 | 0.2 | 0.2 | 1 | 0.6 | 0.6 | 0.75 |
| | | Foam stabilizer (G-3) | | | | | | | | | 0.75 |
| | Blowing agent (D) | Water | 3.4 | 3.4 | 3.4 | 3.4 | 3.4 | 3.4 | 3.0 | 3.0 | 5.8 |
| | Polyisocyanate compound (B) | Polyisocyanate compound (B-1) | 45.56 | 44.59 | 40.89 | 44.55 | 42.25 | 43.19 | 44.61 | 43.74 | 65.95 |

TABLE 3

| Example | | | | Ex. 11 | Ex. 12 | Ex. 13 | Ex. 14 | Ex. 15 | Ex. 16 | Ex. 17 | Ex. 18 |
|---|---|---|---|---|---|---|---|---|---|---|---|
| Blend | | | | Blend (a) | Blend (b) | Blend (c) | Blend (d) | Blend (e) | Blend (g) | Blend (h) | Blend (j) |
| Mold thickness | | | | 100 mm | 100 mm | 100 mm | 100 mm | 100 mm | 100 mm | 100 mm | 70 mm |
| Measured values | Foam weight | | kg | 666 | 675 | 675 | 679 | 677 | 756 | 760 | 280 |
| | Density | Whole | $kg/m^3$ | 42.6 | 43.2 | 42.7 | 43.5 | 43.2 | 50.3 | 50.9 | 25.7 |
| | | Core | $kg/m^3$ | 43.2 | 40.6 | 40.9 | 39.9 | 38.5 | 45.8 | 46.5 | 23.3 |
| | ILD hardness, initial load: 0.5 kg | Initial thickness | mm | 95.3 | 94.2 | 93 | 94.4 | 93.3 | 93.2 | 95.8 | 65.6 |
| | | 25% | N | 174 | 201 | 185 | 200 | 186 | 302 | 263 | 96 |
| | | 50% | N | 359 | 387 | 359 | 385 | 355 | 528 | 484 | 200 |
| | | 65% | N | 568 | 605 | 554 | 604 | 547 | 786 | 750 | 329 |
| | SAG-FACTOR (65/25) | | - | 3.27 | 3.01 | 2.99 | 3.02 | 2.94 | 2.60 | 2.85 | 3.42 |
| | Rebound resilience | | % | 51 | 56 | 53 | 57 | 57 | 57 | 65 | 52 |
| | Tear strength | Layer (1) | N/cm | 11.6 | 11.9 | 16.2 | 12.4 | 15.3 | 10.7 | 11.3 | 8.4 |
| | | Layer (3) | N/cm | 6.4 | 7.6 | 10.8 | 9.6 | 10.3 | 7.1 | 7.5 | 5.8 |
| | | Layer (5) | N/cm | 8.3 | 12.1 | 14.6 | 11.5 | 13.8 | 9.2 | 9.6 | 7.3 |
| | Tensile strength | Layer (1) | KPa | 206.8 | 238.0 | 290.3 | 236.2 | 255.3 | 206.7 | 210.1 | 194.9 |
| | | Layer (3) | KPa | 144.6 | 178.3 | 190.2 | 167.2 | 182.4 | 147.6 | 150.1 | 139.2 |
| | | Layer (5) | KPa | 151.0 | 222.2 | 242.7 | 228.6 | 229.3 | 184.5 | 195.1 | 175.4 |
| | Elongation | Layer (1) | % | 98 | 107 | 179 | 110 | 143 | 110 | 130 | 125 |
| | | Layer (3) | % | 89 | 107 | 123 | 100 | 113 | 92 | 100 | 102 |
| | | Layer (5) | % | 91 | 113 | 160 | 123 | 143 | 110 | 125 | 117 |
| | Compression set | Layer (1) | % | 9.8 | 7.9 | 8.5 | 6.2 | 8.2 | 10.4 | 9.6 | 18.6 |
| | | Layer (3) | % | 6.9 | 3.6 | 5.2 | 3.9 | 4.9 | 5.8 | 5.2 | 9.8 |
| | | Layer (5) | % | 12.9 | 9.9 | 11.0 | 10.3 | 8.9 | 13.9 | 11.4 | 22.5 |

(continued)

| Example | | | | Ex. 11 | Ex. 12 | Ex. 13 | Ex. 14 | Ex. 15 | Ex. 16 | Ex. 17 | Ex. 18 |
|---|---|---|---|---|---|---|---|---|---|---|---|
| | Compression set under humid condition | Layer (1) | % | 39.4 | 35.7 | 42.3 | 38.8 | 42.5 | 42.3 | 31.6 | 54.3 |
| | | Layer (3) | % | 29.1 | 20.2 | 30.4 | 25.0 | 26.2 | 28.2 | 21.8 | 36.2 |
| | | Layer (5) | % | 37.1 | 31.8 | 42.4 | 39.3 | 40.4 | 42.3 | 31.4 | 52.1 |
| | Resonance frequency | | Hz | 3.81 | 3.61 | 3.74 | 3.68 | 3.75 | 3.88 | 3.68 | |
| | Transmissibility at resonance frequency | | - | 4.46 | 4.28 | 3.42 | 4.12 | 3.6 | 3.2 | 3.35 | |
| | 6 Hz transmissibility | | - | 0.85 | 0.65 | 0.72 | 0.69 | 0.72 | 0.94 | 0.81 | |
| | 10 Hz transmissibility | | - | 0.2 | 0.15 | 0.18 | 0.16 | 0.17 | 0.25 | 0.22 | |
| | Hysteresis loss | | % | 25.4 | 21.5 | 23.6 | 23.2 | 20.1 | 25.3 | 23.6 | 38.8 |

As shown by the results in Table 3, in Examples 12 to 15 in which the polyol (A1-1) was used, the tear strength, the tensile strength and the elongation are improved as compared with Example 11 in which the polyol (A1-1) was not used. Particularly, the tear strength, the tensile strength and the elongation of the layer (5) (skin portion) are remarkably improved.

With respect to the SAG-FACTOR, the rebound resilience, the compression set, the transmissibility at resonance frequency, the 6 Hz transmissibility, the 10 Hz transmissibility and the hysteresis loss also, they are more excellent in Examples 12 to 15 than those in Example 11.

Particularly in Example 14 in which the polyol (A1-1) was used and in addition, the first crosslinking agent (E1) and the second crosslinking agent (E2) were used, the hardness is improved as compared with Example 13 in which no crosslinking agent was used and Example 15 in which the second crosslinking agent (E2) was not used.

In Example 12 in which the cell opener (F) was used in addition to the first crosslinking agent (E1) and the second crosslinking agent (E2), the hardness is further improved than in Example 14, and the compression set under humid condition is excellent also.

Further, in Example 16 in which the polyol (A1-2) was used, the tear strength, the tensile strength, the elongation and the hardness are improved as compared with Example 11 in which the polyol (A1-2) was not used.

In Example 17 in which the polyol (A1-3) was used, the tear strength, the tensile strength, the elongation and the hardness are improved as compared with Example 11 in which the polyol (A1-3) was not used. Further, in Example 18 in which the polyol (A1-3) was used, as compared with Example 11 in which the polyol (A1-3) was not used, the tear strength, the tensile strength and the elongation at substantially the same level are obtained even though the density (core) was made to be so low as about 20 kg/$m^3$.

EXAMPLES 21 to 26

In blend ratios (a) to (f) as identified in Table 2, flexible polyurethane foams were produced by a method of carrying out foaming and curing in a state where TAFNEL was disposed in the mold, and evaluated. Examples 22 to 26 are Examples of the present invention, and Examples 21 is a Comparative Example. The evaluation results are shown in Table 4.

Each flexible foam was produced in the same manner as in Example 11 except that as shown in Fig. 2, TAFNEL 13 was preliminarily attached to the interior surface of an upper lid 12 of a mold 11 for a test piece by a double-coated tape. As TAFNEL 13, ESE343F (trade name) manufactured by Mitsui Chemicals, Inc. was used. In this method, as TAFNEL is impregnated with the reactive mixture at the time of foaming and curing, a flexible polyurethane foam integrated with TAFNEL 13 as the uppermost layer on the lid side is obtained, as shown in Fig. 3. In Fig. 3, the reference symbol 1 represents the obtained flexible polyurethane foam.

With respect to the obtained flexible polyurethane foam, the flexible foam whole density and the ILD hardness were measured, and the SAG-FACTOR was determined in the same manner as in Example 11.

Further, in the same manner as in Example 11, the obtained flexible polyurethane foam was sliced in 5 layers in a plane vertical to the height direction. In these Examples, TAFNEL is integrated on the surface of the layer (1) closest to the lid side. With respect to the respective layers (1) to (5), the density was measured, and the difference in the density between the layers (1) and (3) and the difference in the density between the layers (1) and (5) were determined.

Further, with respect to the layers (1), (3) and (5), the teat strength, the tensile strength and the elongation were measured in the same manner as in Example 11.

TABLE 4

| Example | | | | Ex. 21 | Ex. 22 | Ex. 23 | Ex. 24 | Ex.25 | Ex. 26 |
|---|---|---|---|---|---|---|---|---|---|
| Blend | | | | Blend (a) | Blend (b) | Blend (c) | Blend (d) | Blend (e) | Blend (f) |
| | Foam weight | | kg | 681.8 | 692.3 | 696.3 | 695.9 | 691.8 | 691.9 |
| | Density | Whole | kg/$m^3$ | 44.2 | 44.8 | 44.5 | 44.8 | 44.5 | 44.6 |
| | | Layer (1) | kg/$m^3$ | 58.9 | 56.6 | 57.7 | 57.5 | 57.2 | 58.1 |
| | | Layer(2) | kg/$m^3$ | 38.3 | 39.4 | 40.7 | 38.2 | 39.9 | 38.1 |
| | | Layer (3) | kg/$m^3$ | 36.8 | 36.0 | 36.4 | 36.1 | 35.7 | 36.5 |
| | | Layer (4) | kg/$m^3$ | 37.5 | 38.8 | 41.1 | 38.7 | 40.8 | 39.1 |
| | | Layer (5) | kg/$m^3$ | 41.0 | 42.9 | 41.3 | 41.8 | 41.3 | 41.5 |

(continued)

| Example | | | | Ex. 21 | Ex. 22 | Ex. 23 | Ex. 24 | Ex.25 | Ex. 26 |
|---|---|---|---|---|---|---|---|---|---|
| Measured values | Difference in density | (1)-(3) | $kg/m^3$ | 22.1 | 20.6 | 21.3 | 21.4 | 21.5 | 21.6 |
| | | (1)-(5) | $kg/m^3$ | 17.9 | 13.7 | 16.4 | 15.7 | 15.9 | 16.6 |
| | ILD hardness, initial load: 0.5 kg | Initial thickness | mm | 94.7 | 94.1 | 93.3 | 95.1 | 93.0 | 93.2 |
| | | 25% | N | 154 | 167 | 170 | 158 | 160 | 169 |
| | | 50% | N | 302 | 323 | 330 | 307 | 312 | 331 |
| | | 65% | N | 483 | 514 | 517 | 489 | 489 | 518 |
| | SAG-FACTOR (65/25) | | - | 3.14 | 3.08 | 3.05 | 3.10 | 3.06 | 3.07 |
| | Tear strength | Layer (1) | N/cm | 6.8 | 10.1 | 12.4 | 10.1 | 11.7 | - |
| | | Layer (3) | N/cm | 6.5 | 8.8 | 9.4 | 7.8 | 9.4 | - |
| | | Layer (5) | N/cm | 8.5 | 11.5 | 14.7 | 12.6 | 13.5 | - |
| | Tensile strength | Layer (1) | KPa | 148.4 | 217.0 | 241.0 | 216.3 | 223.1 | - |
| | | Layer (3) | KPa | 119.1 | 194.8 | 205.5 | 196.4 | 176.2 | - |
| | | Layer (5) | KPa | 136.6 | 220.6 | 243.5 | 234.1 | 218.2 | - |
| | Elongation | Layer (1) | % | 86 | 112 | 147 | 106 | 140 | - |
| | | Layer (3) | % | 78 | 109 | 126 | 105 | 125 | - |
| | | Layer (5) | % | 85 | 119 | 178 | 125 | 151 | - |

As shown by the results in Table 4, in Examples 22 to 26 in which the polyol (A1) was used, the difference in the density between the layer (1) with which TAFNEL is integrated and the layer (3), and the difference in the density between the layers (1) and (5) are small, as compared with Example 21 in which the polyol (A1) was not used. That is, the dispersion of the density in the foam height direction (thickness direction) is small.

The hardness and the SAG-FACTOR are also more excellent in Examples 22 to 26 than in Example 21.

Further, in Examples 22 to 25, the tear strength, the tensile strength and the elongation are improved as compared with Example 21. Particularly, the tear strength, the tensile strength and the elongation of the layer (5) (skin portion) are remarkably improved.

In Example 22 in which the polyol (A1) was used and in addition, the first crosslinking agent (E1), the second crosslinking agent (E2) and the cell opener (F) were used, the differences in the density between the layers (1) and (3) and between the layers (1) and (5) are smallest.

EXAMPLES 31 to 37

Flexible polyurethane foams were produced and evaluated in blend ratios as identified in Table 5. Examples 31 to 37 are Examples of the present invention. The units of the blend ratios in Table 5 are pars by mass.

Foaming and curing was carried out in the same manner as in Example 11.

Each obtained flexible foam was taken out from the mold, subjected to crushing, and left to stand in a room (temperature: 23°C, relative humidity: 50%) for 24 hours and then evaluated.

TABLE 5

| Blend Example | | | Ex. 31 | Ex. 32 | Ex. 33 | Ex. 34 | Ex. 35 | Ex. 36 | Ex. 37 |
|---|---|---|---|---|---|---|---|---|---|
| Blend ratio of reactive mixture (parts by mass) | Polyol (A) | Polyol (A2-1) | | | | | | | |
| | | Polyol (A1-1) | 50 | 80 | 90 | 80 | | | |
| | | Polyol (A1-4) | | | | | 80 | | |
| | | Polyol (A1-5) | | | | | | 80 | |
| | | Polyol (A1-6) | | | | | | | 80 |
| | | Polyol (A1-7) | | | | | | | |
| | | Polymer-dispersed polyol (A21-1) | 50 | 20 | | 20 | 20 | 20 | 20 |
| | Crosslinking agent (E) | Crosslinking agent (E1-1) | 3 | 1.5 | 10 | 1.5 | 1.5 | 1.5 | 1.5 |
| | | Crosslinking agent (E1-2) | | | | | | | |
| | | Crosslinking agent (E2-1) | 0.5 | 0.5 | 0.5 | 0.5 | 0.5 | 0.5 | 0.5 |
| | Cell opener (F) | Cell opener (F-1) | 1 | 0.5 | 0.5 | 0.5 | 1 | 1 | 1 |
| | Catalyst (C) | Catalyst (C-1) | 0.6 | 0.5 | 0.5 | 0.5 | 0.5 | 0.6 | 0.6 |
| | | Catalyst (C-2) | 0.04 | 0.04 | 0.04 | 0.04 | 0.04 | 0.04 | 0.04 |
| | Foam stabilizer (G) | Foam stabilizer (G-1) | 0.5 | | | | | | |
| | | Foam stabilizer (G-2) | 0.5 | 0.5 | 0.5 | | | | |
| | | Foam stabilizer (G-3) | | | | | | | |
| | | Foam stabilizer (G-4) | | | | 1 | 1 | 1 | 1 |
| | | Foam stabilizer (G-5) | | 0.5 | 0.5 | | | | |
| | | Foam stabilizer (G-6) | | | | | | | |
| | Blowing agent (D) | Water | 3.5 | 3.0 | 3.0 | 2.4 | 2.4 | 2.4 | 2.4 |
| | Polyisocyanate compound (B) | Polyisocyanate compound (B-1) | 44.13 | 37.32 | 43.13 | 31.07 | 31.34 | 31.07 | 31.18 |
| Blend Example | | | Ex. 31 | Ex. 32 | Ex. 33 | Ex.34 | Ex.35 | Ex. 36 | Ex. 37 |
| Mold thickness | | | 100 mm | 100 mm | 100 mm | 100 mm | 100 mm | 100 mm | 100 mm |
| | Foam weight | kg | 673 | 768 | 777 | 966 | 948 | 948 | 947 |

(continued)

| Blend Example | | | | Ex. 31 | Ex. 32 | Ex. 33 | Ex.34 | Ex.35 | Ex. 36 | Ex. 37 |
|---|---|---|---|---|---|---|---|---|---|---|
| Measured values | Density | Whole | $kg/m^3$ | 43.5 | 50.9 | 51.6 | 64.2 | 62.6 | 62.1 | 62.2 |
| | | Core | $kg/m^3$ | 39.0 | 47.1 | 45.8 | 58.7 | 56.7 | 56.7 | 56.7 |
| | ILD hardness, initial load: 0.5 kg | Initial thickness | mm | 95.7 | 95.6 | 96 | 96 | 94.4 | 94.2 | 94.1 |
| | | 25% | N | 185 | 198 | 171 | 243 | 244 | 244 | 245 |
| | | 50% | N | 339 | 331 | 281 | 387 | 391 | 407 | 421 |
| | | 65% | N | 529 | 475 | 407 | 539 | 611 | 661 | 649 |
| | SAG-FACTOR (65/25) | | - | 2.85 | 2.40 | 2.39 | 2.22 | 2.50 | 2.71 | 2.65 |
| | Rebound resilience | Whole | % | 53 | 61 | 69 | 55 | 56 | 67 | 65 |
| | | Core | % | 65 | 61 | 69 | 47 | 58 | 70 | 69 |
| | Tear strength | | N/cm | 6.4 | 7.5 | 4.0 | 5.4 | 5.1 | 6.1 | 6.9 |
| | Tensile strength | | KPa | 165.0 | 104.8 | 71.2 | 73.8 | 81.8 | 136.0 | 143.0 |
| | Elongation | | % | 104 | 134 | 104 | 88 | 95 | 134 | 120 |
| | Compression set | | % | 3.6 | 2.8 | 2.3 | 2.0 | 2.1 | 2.5 | 2.2 |
| | Compression set under humid condition | | % | 14.1 | 12.6 | 5.5 | 7.7 | 11.4 | 10.8 | 9.7 |
| | Resonance frequency | | Hz | 3.75 | 3.53 | 3.41 | 3.16 | 3.51 | 3.08 | 3.12 |
| | Transmissibility at resonance frequency | | - | 2.65 | 2.59 | 3.23 | 1.77 | 2.6 | 2.77 | 2.63 |
| | 6 Hz transmissibility | | - | 0.75 | 0.65 | 0.58 | 0.74 | 0.61 | 0.68 | 0.70 |
| | 10 Hz transmissibility | | - | 0.21 | 0.19 | 0.14 | 0.27 | 0.17 | 0.23 | 0.26 |
| | Hysteresis loss | | % | 21.7 | 18.8 | 14.9 | 16.6 | 15.7 | 14.1 | 14.4 |

As shown in Table 5, in Examples 31 to 37 in which the polyol was used, the compression set, the compression set under humid condition and the hysteresis loss are low, and excellent durability is obtained. From the results in Examples 31 to 33, it was confirmed that the compression set, the compression set under humid condition and the hysteresis loss can be made further lower by increasing the proportion of the polyol. Further, in Example 33 in which no polymer-dispersed polyol was used, a better compression set under humid condition was obtained than in other Examples in which the polymer-dispersed polyol was used.

EXAMPLES 40 to 42

In Examples 40 to 42, flexible polyurethane foams were produced and evaluated in the same manner as in Examples 31 to 37 employing the blend ratios in Table 6 except that the test piece was changed to one of 400 mm in length, 400 mm in width and 70 mm in height. Examples 40 to 42 are Examples of the present invention.

TABLE 6

| Blend Example | | | | Ex. 40 | Ex. 41 | Ex. 42 |
|---|---|---|---|---|---|---|
| | Polyol (A) | Polyol (A1-1) | | 60 | 70 | 70 |
| | | Polymer-dispersed polyol (A21-1) | | 40 | 30 | 30 |
| | Crosslinking agent (E) | Crosslinking agent (E1-1) | | 3 | 3 | |
| | | Crosslinking agent (E1-2) | | | | |
| | | Crosslinking agent (E2-1) | | | 0.5 | 0.5 |
| | | Crosslinking agent (E2-2) | | 1 | 1 | 1 |
| | Cell opener (F) | Cell opener (F-1) | | 1 | 1 | 1 |
| | Catalyst (C) | Catalyst (C-1) | | 0.47 | 0.47 | 0.52 |
| | | Catalyst (C-2) | | 0.05 | 0.05 | 0.04 |
| | Foam stabilizer (G) | Foam stabilizer (G-1) | | | | |
| | | Foam stabilizer (G-2) | | | | 0.5 |
| | | Foam stabilizer (G-3) | | | | |
| | | Foam stabilizer (G-4) | | | | |
| | | Foam stabilizer (G-5) | | | | 0.5 |
| | | Foam stabilizer (G-6) | | 0.2 | 0.2 | |
| | | Foam stabilizer (G-7) | | 0.8 | 0.8 | |
| | Blowing agent (D) | Water | | 3.8 | 3.8 | 2.4 |
| | Polyisocyanate compound (B) | Polyisocyanate compound (B-1) | | 48.74 | 49.96 | 33.19 |
| Mold thickness | | | | 70 mm | 70 mm | 70 mm |
| | Foam weight | | kg | 549 | 556 | 687 |
| | Density | Whole | $kg/m^3$ | 52.6 | 53.4 | 66.4 |
| | | Core | $kg/m^3$ | 49.5 | 49.7 | 61.2 |
| | ILD hardness, initial load: 0.5 kg | Initial thickness | mm | 65.7 | 65.9 | 67.5 |
| | | 25% | N | 278 | 252 | 255 |
| | | 50% | N | 475 | 421 | 400 |
| | | 65% | N | 709 | 628 | 682 |
| | SAG-FACTOR (65/25) | | - | 2.55 | 2.49 | 2.28 |
| | Rebound resilience | Whole | % | 58 | 62 | 67 |
| | | Core | % | 69 | 68 | 67 |

(continued)

| Blend Example | | | Ex. 40 | Ex. 41 | Ex. 42 |
|---|---|---|---|---|---|
| Measured values | Tear strength | N/cm | 7.4 | 6.7 | 6.7 |
| | Tensile strength | KPa | 159.7 | 156.8 | 122.3 |
| | Elongation | % | 94 | 101 | 109 |
| | Compression set | % | 3.9 | 3.7 | 2.0 |
| | Compression set under humid condition | % | 14.5 | 10.5 | 7.2 |
| | Resonance frequency | Hz | 3.85 | 3.65 | 3.58 |
| | Transmissibility at resonance frequency | - | 3.3 | 3.28 | 3.05 |
| | 6 Hz transmissibility | - | 0.78 | 0.67 | 0.65 |
| | 10 Hz transmissibility | - | 0.18 | 0.16 | 0.17 |
| | Hysteresis loss | % | 19.1 | 17.1 | 15.5 |

As shown in Table 6, in Examples 40 to 42 in which the polyol (A1-1) was used, good hysteresis loss, compressions set, compression set under humid condition and hysteresis loss are obtained even though the thickness of the test piece is 70 mm. As a low resonance frequency is obtained even though the thickness of the test piece is 70 mm, in application to a seat cushion for an automobile, the thickness of the seat cushion can be reduced.

EXAMPLES 43 to 47

In Examples 43 to 47, flexible polyurethane foams were produced and evaluated in the same manner as in Examples 31 to 37 employing blend ratios in Table 7 except that the test piece was changed to one of 400 mm in length, 400 mm in width and 50 mm in height. The rebound resilience at the core portion, the compression set and the compression set under humid condition were measured with a sample thickness of 30 mm. Examples 43 to 47 are Examples of the present invention.

TABLE 7

| Blend Example | | | Ex. 43 | Ex. 44 | Ex. 45 | Ex. 46 | Ex. 47 |
|---|---|---|---|---|---|---|---|
| | Polyol (A) | Polyol (A1-1) | 70 | 90 | 90 | | 90 |
| | | Polyol (A1-4) | | | | 90 | |
| | | Polymer-dispersed polyol (A21-1) | 30 | | | | |
| | Crosslinking agent (E) | Crosslinking agent (E1-1) | 3 | 10 | 10 | 10 | 10 |
| | | Crosslinking agent (E1-2) | | | | | |
| | | Crosslinking agent (E2-1) | 0.5 | 0.5 | 0.5 | 0.5 | 0.5 |
| | | Crosslinking agent (E2-2) | | 3 | | | |
| | Cell opener (F) | Cell opener (F-1) | 1 | 0.7 | 1.8 | 1.8 | 1.8 |
| | Catalyst (C) | Catalyst (C-1) | 0.47 | 0.6 | 0.6 | 0.6 | 0.6 |
| | | Catalyst (C-2) | 0.05 | 0.04 | 0.04 | 0.05 | 0.04 |

(continued)

| Blend Example | | | | Ex. 43 | Ex. 44 | Ex. 45 | Ex. 46 | Ex. 47 |
|---|---|---|---|---|---|---|---|---|
| | Foam stabilizer (G) | Foam stabilizer (G-1) | | | | | 0.5 | |
| | | Foam stabilizer (G-2) | | | | | | |
| | | Foam stabilizer (G-3) | | | | | | |
| | | Foam stabilizer (G-4) | | | 0.7 | 0.7 | 0.7 | 0.7 |
| | | Foam stabilizer (G-5) | | | | 0.3 | | 0.3 |
| | | Foam stabilizer (G-6) | | 0.2 | | | | |
| | | Foam stabilizer (G-7) | | 1 | | | | |
| | Blowing agent (D) | Water | | 3.8 | 2.8 | 2.2 | 2.2 | 2.2 |
| | Polyisocyanate compound (B) | Polyisocyanate compound (B-1) | | 46.91 | 55.36 | 34.99 | 35.25 | 34.99 |
| Mold thickness | | | | 50 mm | 50 mm | 50 mm | 50 mm | 50 mm |
| Measured values | Foam weight | | kg | 450 | 468 | 569 | 552 | 608 |
| | Density | Whole | $kg/m^3$ | 57.0 | 59.5 | 69.9 | 68.7 | 74.9 |
| | | Core | $kg/m^3$ | 49.7 | 54.0 | 66.5 | 65.0 | 71.1 |
| | ILD hardness, initial load: 0.5 kg | Initial thickness | mm | 49.4 | 49.7 | 50.9 | 50.3 | 51.1 |
| | | 25% | N | 245 | 261 | 250 | 245 | 290 |
| | | 50% | N | 380 | 433 | 360 | 353 | 416 |
| | | 65% | N | 587 | 675 | 509 | 498 | 585 |
| | SAG-FACTOR (65/25) | | - | 2.40 | 2.59 | 2.04 | 2.03 | 2.02 |
| | Rebound resilience | Whole | % | 62 | 66 | 67 | 67 | 71 |
| | | Core | % | 72 | 80 | 74 | 67 | 74 |
| | Tear strength | | N/cm | 6.7 | 4.4 | 4.1 | 4.0 | 4.0 |
| | Tensile strength | | KPa | 172.5 | 101.4 | 85.2 | 73.8 | 82.9 |
| | Elongation | | % | 113 | 82 | 92 | 75 | 92 |
| | Compression set | | % | 2.1 | 2.5 | 1.3 | 0.8 | 0.7 |
| | Compression set under humid condition | | % | 11.8 | 6.8 | 4.6 | 5.3 | 4.2 |
| | Resonance frequency | | Hz | 4.11 | 3.89 | 3.62 | 3.66 | 3.58 |
| | Transmissibility at resonance frequency | | - | 2.48 | 4.11 | 3.36 | 2.8 | 3.61 |
| | 6 Hz transmissibility | | - | 1.01 | 0.8 | 0.66 | 0.68 | 0.63 |
| | 10 Hz transmissibility | | - | 0.26 | 0.18 | 0.17 | 0.18 | 0.17 |
| | Hysteresis loss | | % | 16.5 | 15.2 | 13.9 | 13.2 | 13.7 |

As shown in Table 7, in Examples 43 to 47 in which the polyol (A1-1) or (A1-4) was used, good hysteresis loss, compression set and compression set under humid condition are obtained even thought the thickness of the test piece is 50 mm. Further, in Examples 44 to 47 in which no polymer-dispersed polyol was used, a lower resonance frequency and better hysteresis loss, compression set and compression set under humid condition are obtained as compared with Example 43 in which the polymer-dispersed polyol was used.

Further, as a low resonance frequency is obtained even though the thickness of the test piece is 50 mm, in application to a seat cushion for an automobile, the thickness of the seat cushion can be reduced.

EXAMPLES 48 to 50

In Examples 48 to 50, flexible polyurethane foams were produced and evaluated in the same manner as in Examples 31 to 37 employing blend ratios as identified in Table 8, except that the test piece had a size of 400 mm in length, 400 mm in width and 40 mm in height, and that the rebound resilience at the core portion, the compression set and the compression set under humid condition were measured with a sample thickness of 20 mm. Examples 48 to 50 are Examples of the present invention.

TABLE 8

| Blend Example | | | | Ex. 48 | Ex. 49 | Ex. 50 |
|---|---|---|---|---|---|---|
| | Polyol (A) | Polyol (A1-1) | | 90 | | |
| | | Polyol (A1-4) | | | | 80 |
| | | Polyol (A1-8) | | | 80 | |
| | | Polymer-dispersed polyol (A21-1) | | | 20 | 20 |
| | Crosslinking agent (E) | Crosslinking agent (E1-1) | | 10 | 1.5 | 1.5 |
| | | Crosslinking agent (E1-2) | | | | |
| | | Crosslinking agent (E2-1) | | 0.5 | 0.5 | 0.5 |
| | | Crosslinking agent (E2-2) | | | | |
| | Cell opener (F) | Cell opener (F-1) | | 1.5 | 0.5 | 0.5 |
| | Catalyst (C) | Catalyst (C-1) | | 0.6 | 0.5 | 0.4 |
| | | Catalyst (C-2) | | 0.04 | 0.04 | 0.05 |
| | Foam stabilizer (G) | Foam stabilizer (G-1) | | | | |
| | | Foam stabilizer (G-2) | | | 0.5 | 0.7 |
| | | Foam stabilizer (G-3) | | | | |
| | | Foam stabilizer (G-4) | | 1 | | |
| | | Foam stabilizer (G-5) | | | 0.5 | |
| | | Foam stabilizer (G-6) | | | | |
| | | Foam stabilizer (G-7) | | | | |
| | Blowing agent (D) | Water | | 2.4 | 2.4 | 2.4 |
| | Polyisocyanate compound (B) | Polyisocyanate compound (B-1) | | 37.05 | 32.01 | 30.95 |
| Mold thickness | | | | 40 m | 40 m | 40 m |
| | Foam weight | | kg | 468 | 473 | 477 |
| | Density | Whole | | 73.7 | 73.7 | 74.0 |
| | | Core | kg/m$^3$ | 65.1 | 71.1 | 69.1 |
| | ILD hardness, initial load: 0.5 kg | Initial thickness | mm | 40.3 | 40.4 | 40.2 |
| | | 25% | N | 266 | 320 | 260 |
| | | 50% | N | 377 | 457 | 393 |
| | | 65% | N | 550 | 651 | 589 |
| | SAG-FACTOR (65/25) | | - | 2.07 | 2.04 | 2.27 |
| | Rebound resilience | Whole | % | 72 | 51 | 67 |
| | | Core | % | 73 | 56 | 67 |

(continued)

| Blend Example | | | Ex. 48 | Ex. 49 | Ex. 50 |
|---|---|---|---|---|---|
| Measured values | Tear strength | N/cm | 4.4 | 5.4 | 8.0 |
| | Tensile strength | KPa | 91.1 | 104.0 | 153.4 |
| | Elongation | % | 75 | 85 | 105 |
| | Compression set | % | 1.3 | 4.7 | 3.7 |
| | Compression set under humid condition | % | 4.8 | 10.1 | 9.3 |
| | Resonance frequency | Hz | 3.88 | 7.43 | 4.31 |
| | Transmissibility at resonance frequency | - | 2.88 | 2.57 | 2.73 |
| | 6 Hz transmissibility | - | 0.84 | 1.58 | 1.14 |
| | 10 Hz transmissibility | - | 0.21 | 1.03 | 0.28 |
| | Hysteresis loss | % | 12.3 | 32.4 | 15.1 |

As shown in Table 8, in Examples 48 to 50 in which the polyol (A1-1, A1-4 or A1-8) was used, the hysteresis loss, the compression set and the compression set under humid condition are low, and excellent durability is obtained. Further, as a low resonance frequency was obtained even though the thickness of the test piece is 40 mm, in application to a seat cushion for an automobile, the thickness of the seat cushion can be reduce.

EXAMPLES 51 to 60

Examples 51 to 60 are Examples in which TDI-80 (manufactured by Nippon Polyurethane Industry Co., Ltd.) was used as the polyisocyanate compound, and Examples 54 to 60 are Examples of the present invention and Examples 51 to 53 are Comparative Examples. Flexible polyurethane foams were produced and evaluated in the same manner as in Examples 31 to 37 employing blend ratios as identified in Table 9 except that the thickness of the test piece was changed to 100, 70, 50 or 40 mm. When the thickness of the test piece was 50 mm, the rebound resilience at the core portion, the compressions set and the compression set under humid condition were measured with a sample thickness of 30 mm. When the thickness of the test piece was 40 mm, the rebound resilience at the core portion, the compression set and the compression set under humid condition were measured with a sample thickness of 20 mm.

TABLE 9

| Blend Example | | | | Ex. 51 | Ex. 52 | Ex. 53 | Ex. 54 | Ex. 55 | Ex. 56 | Ex. 57 | Ex. 58 | Ex. 59 | Ex. 60 |
|---|---|---|---|---|---|---|---|---|---|---|---|---|---|
| Blend ratio of reactive mixture (parts by mass) | Polyol (A) | Polyol (A2-1) | | 60 | 60 | 60 | | | | | | | |
| | | Polyol (A1-1) | | | | | 60 | 60 | 60 | 60 | 60 | 60 | 60 |
| | | Polymer-dispersed polyol (A21-1) | | 40 | 40 | 40 | 40 | 40 | 40 | 40 | 40 | 40 | 40 |
| | Crosslinking agent (E) | Crosslinking agent (E1-1) | | 1.5 | 1.5 | 1.5 | 1.5 | 3 | 1.5 | 1.5 | 1.5 | 1.5 | 1.5 |
| | | Crosslinking agent (E1-2) | | | | | | | | | | | |
| | | Crosslinking agent (E2-1) | | 0.5 | 0.5 | 0.5 | 0.5 | 0.5 | 0.5 | 0.3 | 0.5 | 0.5 | 0.5 |
| | Cell opener (F) | Cell opener (F-1) | | 0.5 | 0.5 | 0.5 | 0.5 | 0.7 | 0.5 | | 0.5 | 0.7 | 0.7 |
| | Catalyst (C) | Catalyst (C-1) | | 0.45 | 0.45 | 0.45 | 0.45 | 0.6 | 0.45 | 0.5 | 0.45 | 0.5 | 0.5 |
| | | Catalyst (C-2) | | 0.05 | 0.05 | 0.05 | 0.05 | 0.04 | 0.05 | 0.05 | 0.05 | 0.05 | 0.05 |
| | Foam stabilizer (G) | Foam stabilizer (G-1) | | 1 | 1 | 1 | | | | | | | |
| | | Foam stabilizer (G-2) | | | | | 0.5 | 0.5 | 0.5 | 0.5 | 0.5 | 0.5 | 0.5 |
| | | Foam stabilizer (G-3) | | | | | | | | | | | |
| | | Foam stabilizer (G-4) | | | | | | | | | | | |
| | | Foam stabilizer (G-5) | | | | | 0.5 | 0.5 | 0.5 | 0.5 | 0.5 | 0.5 | 0.5 |
| | Blowing agent (D) | Water | | 2.4 | 2.4 | 2.4 | 2.4 | 3.5 | 2.4 | 3.5 | 2.4 | 3.5 | 3.5 |
| | Polyisocyanate compound (B) | Polyisocyanate compound (B-2) | | 30.02 | 30.02 | 30.02 | 28.99 | 40.80 | 28.99 | 39.14 | 28.99 | 39.69 | 39.69 |
| Mold thickness | | | | 100 | 70 | 50 | 100 | 100 | 70 | 70 | 50 | 50 | 50 |
| | Foam weight | | kg | 950 | 690 | 497 | 952 | 724 | 690 | 536 | 480 | 418 | 391 |
| | Density | Whole | $kg/m^3$ | 62.2 | 63.3 | 63.1 | 61.7 | 46.2 | 62.4 | 48.7 | 60.7 | 52.4 | 49.1 |
| | | Core | $kg/m^3$ | 58.4 | 58.7 | 60.1 | 57.5 | 43.7 | 58.3 | 44.3 | 58.1 | 49.9 | 47.8 |

(continued)

| Blend Example | | | | Ex. 51 | Ex. 52 | Ex. 53 | Ex. 54 | Ex. 55 | Ex. 56 | Ex. 57 | Ex. 58 | Ex. 59 | Ex. 60 |
|---|---|---|---|---|---|---|---|---|---|---|---|---|---|
| Measured values | ILD hardness, initial load: 0.5 kg | Initial thickness | mm | 97.4 | 69.9 | 50 | 97.8 | 96.2 | 70.2 | 68.4 | 49.8 | 49.7 | 49.6 |
| | | 25% | N | 276 | 255 | 239 | 299 | 228 | 284 | 246 | 255 | 262 | 232 |
| | | 50% | N | 491 | 439 | 391 | 503 | 404 | 457 | 414 | 382 | 410 | 366 |
| | | 65% | N | 756 | 683 | 610 | 732 | 598 | 661 | 624 | 564 | 601 | 535 |
| | SAG-FACTOR (65/25) | | - | 2.74 | 2.68 | 2.55 | 2.45 | 2.63 | 2.32 | 2.53 | 2.21 | 2.30 | 2.30 |
| | Rebound resilience | Whole | % | 61 | 62 | 59 | 63 | 57 | 62 | 53 | 60 | 56 | 53 |
| | | Core | % | 67 | 64 | 62 | 67 | 61 | 62 | 51 | 66 | 63 | 61 |
| | Tear strength | | N/cm | 7.7 | 8.3 | 8.8 | 8.6 | 7.6 | 10.5 | 11.5 | 10.0 | 11.4 | 10.7 |
| | Tensile strength | | KPa | 151.0 | 148.2 | 159.7 | 162.1 | 174.4 | 169.9 | 197.8 | 166.0 | 204.0 | 187.6 |
| | Elongation | | % | 113 | 112 | 118 | 122 | 110 | 134 | 135 | 130 | 131 | 127 |
| | Compression set | | % | 3.9 | 4.2 | 5.6 | 3.1 | 4.9 | 3.6 | 5.5 | 4.2 | 5.2 | 6.1 |
| | Compression set under humid condition | | % | 11.5 | 12.1 | 13.3 | 10.3 | 18.8 | 10.7 | 20.0 | 11.2 | 16.3 | 17.0 |
| | Resonance frequency | | Hz | 3.42 | 3.91 | 4.43 | 3.29 | 3.81 | 3.68 | 4.11 | 4.05 | 4.28 | 4.35 |
| | Transmissibility at resonance frequency | | - | 4.1 | 3.79 | 3.54 | 3.94 | 2.63 | 3.75 | 2.47 | 3.61 | 3.33 | 2.98 |
| | 6 Hz transmissibility | | - | 0.56 | 0.86 | 1.3 | 0.52 | 0.85 | 0.72 | 1.1 | 1.03 | 1.19 | 1.35 |
| | 10 Hz transmissibility | | - | 0.12 | 0.2 | 0.3 | 0.12 | 0.21 | 0.17 | 0.3 | 0.24 | 0.27 | 0.32 |
| | Hysteresis loss | | % | 21.5 | 19.7 | 22.0 | 17.8 | 20.2 | 18.1 | 21.5 | 19.1 | 22.3 | 23.1 |

As shown in Table 9, in Examples 54 to 60 in which the polyol (A1-1) was used, the hysteresis loss, the compression set, the compression set under humid condition and the hysteresis loss are low, and excellent durability is obtained, as compared with Examples 51 to 53 in which the polyol (A1-1) was not used.

EXAMPLES 61 to 71

Examples 61 to 71 are Examples in which a mixture comprising 50 parts by mass of 4,4'-diphenylmethane diisocyanate (MDI) and 50 parts by mass of 2,4'-MDI, polymethylene polyphenyl polyisocyanate (Polymeric MDI) or carbodiimide-modified diphenylmethane diisocyanate was used as the polyisocyanate compound, and Examples 61 to 71 are Examples of the present invention.

TABLE 10

| Blend Example | | | Ex. 61 | Ex. 62 | Ex. 63 | Ex. 64 | Ex. 65 | Ex. 66 | Ex. 67 | Ex. 68 | Ex. 69 | Ex. 70 | Ex. 71 |
|---|---|---|---|---|---|---|---|---|---|---|---|---|---|
| | Polyol (A) | Polyol (A1-1) | 90 | 90 | 90 | 90 | 70 | 90 | 90 | 90 | | | |
| | | Polyol (A1-4) | | | | | | | | | 90 | 90 | 90 |
| | | Polymer-dispersed polyol (A21-1) | | | | | 20 | | | | | | |
| | Crosslinking agent (E) | Crosslinking agent (E1-1) | | | | | | | | | | | |
| | | Crosslinking agent (E1-2) | | | | | | | | | | | |
| | | Crosslinking agent (E1-3) | 0.2 | 0.2 | 0.2 | 0.2 | 0.2 | 0.2 | 0.2 | 0.2 | 0.2 | 0.2 | 0.2 |
| | | Crosslinking agent (E2-1) | 0.5 | 0.5 | 0.5 | 0.5 | 0.5 | 0.5 | 0.5 | 0.5 | 0.5 | 0.5 | 0.5 |
| | Cell opener (F) | Cell opener (F-1) | 10 | 10 | 10 | 10 | 10 | 10 | | | | | |
| | | Cell opener (F-2) | | | | | | | 10 | 10 | 10 | 10 | 10 |
| | Catalyst (C) | Catalyst (C-1) | | | | | | | | | | | |
| | | Catalyst (C-2) | 0.05 | 0.05 | 0.05 | 0.05 | 0.05 | 0.02 | 0.02 | 0.02 | 0.05 | 0.05 | 0.05 |
| | | Catalyst (C-3) | 0.4 | 0.4 | 0.4 | 0.4 | 0.4 | 0.4 | 0.4 | 0.4 | 0.4 | 0.4 | 0.4 |
| | Foam stabilizer (G) | Foam stabilizer (G-1) | 0.5 | 0.5 | 0.5 | 0.5 | 0.5 | 0.5 | 0.5 | 0.5 | 0.5 | 0.5 | 0.5 |
| | | Foam stabilizer (G-2) | | | | | | | | | | | |
| | | Foam stabilizer (G-3) | | | | | | | | | | | |
| | | Foam stabilizer (G-4) | | | | | | | | | | | |
| | | Foam stabilizer (G-5) | | | | | | | | | | | |
| | Blowing agent (D) | Water | 3.6 | 3.6 | | 3.6 | 3.6 | 3.6 | 3.6 | 3.6 | 3.6 | 3.6 | 3.6 |

(continued)

| Blend Example | | | | Ex. 61 | Ex. 62 | Ex. 63 | Ex. 64 | Ex. 65 | Ex. 66 | Ex. 67 | Ex. 68 | Ex. 69 | Ex. 70 | Ex. 71 |
|---|---|---|---|---|---|---|---|---|---|---|---|---|---|---|
| | Polyisocyanate compound (B) | Polyisocyanate compound (B-3) | | 29.43 | 61.06 | 29.80 | 29.42 | 29.49 | 29.42 | 29.51 | 29.51 | 29.60 | 29.60 | 29.60 |
| | | Polyisocyanate compound (B-4) | | 29.43 | | | 29.42 | 29.49 | 29.42 | 29.51 | 29.51 | 29.60 | 29.60 | 29.60 |
| | | Polyisocyanate compound (B-5) | | | | 29.80 | | | | | | | | |
| Mold thickness | | | | 100 | 100 | 100 | 70 | 70 | 50 | 70 | 50 | 100 | 70 | 50 |
| Measured values | Foam weight | | kg | 904 | 894 | 896 | 678 | 679 | 554 | 675 | 555 | 900 | 681 | 557 |
| | Density | Whole | $kg/m^3$ | 60.2 | 59.4 | 58.5 | 65.2 | 65.3 | 68.1 | 65.1 | 67.9 | 61.0 | 65.5 | 68.3 |
| | | Core | $kg/m^3$ | 52.6 | 51.0 | 54.2 | 56.3 | 57.0 | 57.5 | 56.9 | 59.7 | 52.8 | 56.9 | 57.7 |
| | ILD hardness, initial load: 0.5 kg | Initial thickness | mm | 97.5 | 98.5 | 98.9 | 66.9 | 66.7 | 50.5 | 67 | 50.7 | 97.3 | 66.8 | 50.5 |
| | | 25% | N | 272 | 276 | 351 | 297 | 328 | 276 | 309 | 286 | 280 | 301 | 295 |
| | | 50% | N | 435 | 440 | 602 | 454 | 519 | 405 | 468 | 425 | 445 | 461 | 440 |
| | | 65% | N | 622 | 665 | 879 | 659 | 765 | 596 | 670 | 628 | 645 | 685 | 625 |
| | SAG-FACTOR (65/25) | | - | 2.29 | 2.41 | 2.50 | 2.22 | 2.33 | 2.16 | 2.17 | 2.20 | 2.30 | 2.28 | 2.12 |
| | Rebound resilience | Whole | % | 60 | 64 | 45 | 58 | 54 | 60 | 60 | 56 | 62 | 59 | 60 |
| | | Core | % | 65 | 70 | 39 | 58 | 57 | 68 | 64 | 66 | 63 | 62 | 65 |
| | Tear strength | | N/cm | 4.9 | 4.5 | 6.1 | 5.8 | 7.0 | 6.1 | 4.8 | 5.1 | 5.1 | 5.3 | 5.4 |
| | Tensile strength | | KPa | 100.0 | 92.0 | 116.0 | 113.2 | 142.9 | 133.9 | 101.6 | 124.1 | 105.0 | 110.0 | 128.0 |
| | Elongation | | % | 95 | 80 | 85 | 92 | 90 | 103 | 80 | 106 | 90 | 90 | 99 |
| | Compression set | | % | 2.1 | 0.8 | 2.6 | 2.2 | 2.5 | 2.5 | 2.0 | 1.9 | 1.8 | 1.7 | 2.8 |
| | Compression set under humid condition | | % | 4.1 | 2.9 | 4.6 | 5.1 | 6.6 | 3.9 | 6.4 | 3.7 | 3.8 | 3.6 | 4.5 |
| | Resonance frequency | | Hz | 3.21 | 3.00 | 4.24 | 3.66 | 3.92 | 3.92 | 3.71 | 3.97 | 3.25 | 3.65 | 3.93 |
| | Transmissibility at resonance frequency | | - | 2.26 | 3.22 | 1.85 | 2.2 | 2.03 | 1.94 | 2.19 | 2.08 | 2.33 | 2.25 | 1.99 |

(continued)

| Blend Example | | | Ex. 61 | Ex. 62 | Ex. 63 | Ex. 64 | Ex. 65 | Ex. 66 | Ex. 67 | Ex. 68 | Ex. 69 | Ex. 70 | Ex. 71 |
|---|---|---|---|---|---|---|---|---|---|---|---|---|---|
| | 6 Hz transmissibility | - | 0.52 | 0.42 | 1.34 | 0.7 | 0.93 | 0.93 | 0.77 | 0.86 | 0.55 | 0.71 | 0.95 |
| | 10 Hz transmissibility | - | 0.16 | 0.09 | 0.45 | 0.21 | 0.28 | 0.31 | 0.23 | 0.29 | 0.17 | 0.22 | 0.32 |
| | Hysteresis loss | % | 16.6 | 16.2 | 26.6 | 16.4 | 18.0 | 15.4 | 17.0 | 15.9 | 16.8 | 16.6 | 15.3 |

Flexible polyurethane foams were produced and evaluated in the same manner as in Examples 31 to 37 employing blend ratios as identified in Table 10, except that the thickness of the test piece was changed to 100, 70, 50 or 40 mm. When the thickness of the test piece was 50 mm, the rebound resilience at the core portion, the compression set and the compression set under humid condition were measured with a sample thickness of 30 mm. When the thickness of the test piece was 40 mm, the rebound resilience at the core portion, the compression set and the compression set under humid condition were measured with a sample thickness of 20 mm.

As shown in Table 10, in Examples 61 to 71 in which the polyol (A1-1) or (A1-4) was used, the hysteresis loss, the compression set and the compression set under humid condition are low, and excellent durability is obtained. Further, as a low resonance frequency is obtained even though the thickness of the test piece is 40 mm, in application to a seat cushion for an automobile, the thickness of the seat cushion can be reduced.

[Storage stability test]

A polyol system solution (polyol system solution (A1-9)) in a blend ratio in Example 1 except that the polyol (A1-1) was replaced with the polyol (A1-9) and a polyol system solution (polyol system solution (A1-10)) in a blend ratio in Example 1 except that the polyol (A1-1) was replaced with the polyol (A1-10), were stored in an oven at 50°C for 10 days. After cooling to 23°C, in the same manner as in Example 1, flexible polyurethane foams were produced. Of the flexible polyurethane foam obtained by using the polyol system solution (A1-9), the tear strength at the core portion was 5.8 N/cm, however, of the flexible polyurethane foam obtained by using the polyol system solution (A1-10), the tear strength at the core portion was 5.0 N/cm.

INDUSTRIAL APPLICABILITY

A flexible polyurethane foam obtainable by the production process of the present invention can be used for an interior material for an automobile, an interior material for a railway vehicle, bedding, a furnishing cushion, etc.

It is particularly suitable for a seat cushion for an automobile or a furnishing cushion, since it has excellent mechanical properties, and impregnation of a nonwoven fabric at the time of foaming is suppressed.

REFERENCE SYMBOLS

1: Flexible polyurethane foam
11: Mold
12: Upper lid
13: TAFNEL (registered trademark)

**Claims**

1. A process for producing a flexible polyurethane foam, which comprises reacting and foaming and curing a reactive mixture containing a polyol (A), a polyisocyanate compound (B), a catalyst (C) and a blowing agent (D), wherein the polyol (A) contains from 2 to 100 mass% of a polyoxyalkylene polyol (A1) obtained by the following production process in 100 mass% of the polyol (A);
process for producing the polyoxyalkylene polyol (A1): a process for producing a polyoxyalkylene polyol by subjecting an alkylene oxide to ring-opening addition polymerization to an initiator having a hydroxy group in the presence of a double metal cyanide complex catalyst; comprising
an initial step of supplying an alkylene oxide in an amount of from 5 to 20 parts by mass per 100 parts by mass of the initiator to a reaction system containing the initiator and the double metal cyanide complex catalyst to carry out reaction, and a polymerization step of newly supplying an alkylene oxide to the reaction system after the initial step to carry out ring-opening addition polymerization, wherein
in the initial step, the temperature of the reaction system when supply of the alkylene oxide is started is from 120 to 165°C, and the maximum temperature of the reaction system after supply of the alkylene oxide in the initial step is higher by from 15 to 50°C than the temperature when supply of the alkylene oxide is started.

2. The process for producing a flexible polyurethane foam according to Claim 1, wherein the polyol (A) contains from 40 to 100 mass% of the polyoxyalkylene polyol (A1) in 100 mass% of the polyol (A).

3. The process for producing a flexible polyurethane foam according to Claim 1 or 2, wherein the alkylene oxide supplied in the polymerization step is propylene oxide alone or a mixture of propylene oxide and ethylene oxide.

4. The process for producing a flexible polyurethane foam according to any one of Claims 1 to 3, wherein the double metal cyanide complex catalyst has tert-butyl alcohol as an organic ligand.

5. The process for producing a flexible polyurethane foam according to any one of Claims 1 to 4, wherein the process for producing the polyoxyalkylene polyol (A1) further has, after the polymerization step, a step of reacting ethylene oxide with the polyol formed in the polymerization step in the presence of an alkali metal catalyst.

6. The process for producing a flexible polyurethane foam according to any one of Claims 1 to 5, wherein of the polyoxyalkylene polyol (A1), the average number of hydroxy groups is from 2 to 8, the hydroxy value is from 5 to 45 mgKOH/g, the degree of unsaturation is at most 0.030 meq/g, and the oxyethylene group content is from 5 to 30 mass%.

7. The process for producing a flexible polyurethane foam according to any one of Claims 1 to 6, wherein the average number of hydroxy groups of the polyoxyalkylene polyol (A1) is from 2.5 to 4.5.

8. The process for producing a flexible polyurethane foam according to any one of Claims 5 to 7, wherein the entire amount of the oxyethylene groups contained are present at terminal portions of the molecule.

9. The process for producing a flexible polyurethane foam according to any one of Claims 1 to 8, wherein the reactive mixture further contains a crosslinking agent (E), and the crosslinking agent (E) is at least one crosslinking agent selected from the following first crosslinking agent (E1) and second crosslinking agent (E2):

first crosslinking agent (E1): a polyoxyalkylene polyol having a hydroxy value of from 160 to 1,000 mgKOH/g;
second crosslinking agent (E2): a compound having no polyether chain, having at least two active hydrogen groups, and in a case where the active hydrogen groups are hydroxy groups, having a hydroxy value higher than 1,000 mgKOH/g.

10. The process for producing a flexible polyurethane foam according to any one of Claims 1 to 9, wherein the reactive mixture further contains the following cell opener (F):

cell opener (F): a polyoxyalkylene polyol having an average of from 2 to 8 hydroxy groups, a hydroxy value of from 20 to 200 mgKOH/g, and an ethylene oxide content of from 50 to 100 mass%.

11. The process for producing a flexible polyurethane foam according to any one of Claims 1 to 10, wherein the blowing agent (D) is water.

12. The process for producing a flexible polyurethane foam according to any one of Claims 1 to 11, wherein the polyol (A) contains polymer particles (H) in an amount of from 0 to 30 mass%.

13. The process for producing a flexible polyurethane foam according to Claim 12, wherein in the polyol (A), the following polymer-dispersed polyol (A21) is blended:

(A21): a polymer-dispersed polyol (A21) having the above polymer particles (H) dispersed in a polyol (A2) which is a polyol other than the polyoxyalkylene polyol (A1);
(A2): a polyol having an average of from 2 to 8 hydroxy groups and a hydroxy value of from 25 to 160 mgKOH/g.

14. A seat using a flexible polyurethane foam produced by the process as defined in any one of Claims 1 to 13.

**Patentansprüche**

1. Verfahren zur Herstellung eines Polyurethan-Weichschaums, welches das Umsetzen und Aufschäumen und Härten eines reaktiven Gemisches umfasst, das ein Polyol (A), eine Polyisocyanatverbindung (B), einen Katalysator (C) und ein Treibmittel (D) enthält, wobei das Polyol (A) von 2 bis 100 Masseprozent eines Polyoxyalkylenpolyols (A1) enthält, das durch das folgende Herstellungsverfahren in 100 Masseprozent des Polyols (A) erhalten wird:

Verfahren zur Herstellung des Polyoxyalkylenpolyols (A1): ein Verfahren zur Herstellung eines Polyoxyalkylenpolyols, indem ein Alkylenoxid einer Ringöffnungs-Additionspolymerisation mit einem Initiator, der eine Hydroxygruppe aufweist, in Anwesenheit eines Doppelmetallcyanidkomplex-Katalysators unterzogen wird; umfassend:

einen ersten Schritt des Zuführens des Alkylenoxids in einer Menge von 5 bis 20 Masseanteilen pro 100 Masseanteile des Initiators zu einem Reaktionssystem, das den Initiator und den Doppelmetallcyanidkomplex-Katalysator enthält, um die Umsetzung durchzuführen, und
einen Polymerisationsschritt, in dem dem Reaktionssystem nach dem ersten Schritt erneut Alkylenoxid zugeführt wird, um die Ringöffnungs-Additionspolymerisation durchzuführen, wobei
die Temperatur des Reaktionssystems in dem ersten Schritt, wenn die Zuführung des Alkylenoxids begonnen wird, von 120 bis 165°C beträgt und die Maximaltemperatur des Reaktionssystems nach Zuführung des Alkylenoxids in dem ersten Schritt um 15 bis 50°C höher ist als die Temperatur, bei der die Zuführung des Alkylenoxids begonnen wird.

**2.** Verfahren zur Herstellung eines Polyurethan-Weichschaums nach Anspruch 1, wobei das Polyol (A) von 40 bis 100 Masseprozent des Polyoxyalkylenpolyols (A1) in 100 Masseprozent des Polyols (A) enthält.

**3.** Verfahren zur Herstellung eines Polyurethan-Weichschaums nach Anspruch 1 oder 2, wobei das in dem Polymerisationsschritt zugeführte Alkylenoxid allein Propylenoxid ist oder eine Mischung aus Propylenoxid und Ethylenoxid.

**4.** Verfahren zur Herstellung eines Polyurethan-Weichschaums nach einem der Ansprüche 1 bis 3, wobei der Doppelmetallcyanidkomplex-Katalysator einen tert-Butylalkohol als organischen Liganden aufweist.

**5.** Verfahren zur Herstellung eines Polyurethan-Weichschaums nach einem der Ansprüche 1 bis 4, wobei das Verfahren zur Herstellung des Polyoxyalkylenpolyols (A1) ferner nach dem Polymerisationsschritt einen Schritt aufweist, in dem Ethylenoxid mit dem in dem Polymerisationsschritt gebildeten Polyol in Anwesenheit eines Alkalimetall-Katalysators umgesetzt wird.

**6.** Verfahren zur Herstellung eines Polyurethan-Weichschaums nach einem der Ansprüche 1 bis 5, wobei bei dem Polyoxyalkylenpolyol (A1) die durchschnittliche Anzahl der Hydroxygruppen von 2 bis 8 beträgt, die Hydroxylzahl von 5 bis 45 mgKOH/g beträgt, der Ungesättigtheitsgrad höchstens 0,030 mEq/g beträgt und der Gehalt an Oxyethylengruppen von 5 bis 30 Masseprozent beträgt.

**7.** Verfahren zur Herstellung eines Polyurethan-Weichschaums nach einem der Ansprüche 1 bis 6, wobei die durchschnittliche Anzahl an Hydroxygruppen des Polyoxyalkylenpolyols (A1) von 2,5 bis 4,5 beträgt.

**8.** Verfahren zur Herstellung eines Polyurethan-Weichschaums nach einem der Ansprüche 5 bis 7, wobei die Gesamtmenge der enthaltenen Oxyethylengruppen an den terminalen Anteilen des Moleküls vorliegt.

**9.** Verfahren zur Herstellung eines Polyurethan-Weichschaums nach einem der Ansprüche 1 bis 8, wobei das reaktive Gemisch ferner einen Vernetzer (E) enthält und der Vernetzer (E) wenigstens ein Vernetzer ist, ausgewählt aus dem folgenden ersten Vernetzer (E1) und dem zweiten Vernetzer (E2):

erster Vernetzer (E1): ein Polyoxyalkylenpolyol mit einer Hydroxylzahl von 160 bis 1.000 mgKOH/g;
zweiter Vernetzer (E2): eine Verbindung, die keine Polyetherkette aufweist, die wenigstens zwei aktive Wasserstoffgruppen aufweist und in dem Fall, in dem die aktiven Wasserstoffgruppen Hydroxygruppen sind, weist sie eine Hydroxylzahl höher als 1.000 mgKOH/g auf.

**10.** Verfahren zur Herstellung eines Polyurethan-Weichschaums nach einem der Ansprüche 1 bis 9, wobei das reaktive Gemisch ferner den folgenden Zellöffner (F) enthält:

Zellöffner (F): ein Polyoxyalkylenpolyol mit einem Durchschnitt von 2 bis 8 Hydroxygruppen, einer Hydroxylzahl von 20 bis 200 mgKOH/g und einem Gehalt an Ethylenoxid von 50 bis 100 Masseprozent.

**11.** Verfahren zur Herstellung eines Polyurethan-Weichschaums nach einem der Ansprüche 1 bis 10, wobei das Treibmittel (D) Wasser ist.

**12.** Verfahren zur Herstellung eines Polyurethan-Weichschaums nach einem der Ansprüche 1 bis 11, wobei das Polyol (A) Polymerpartikel (H) in einer Menge von 0 bis 30 Masseprozent enthält.

**13.** Verfahren zur Herstellung eines Polyurethan-Weichschaums nach Anspruch 12, wobei mit dem Polyol (A) das folgende Polymer-dispergierte Polyol (A21) vermischt ist:

(A21): ein Polymer-dispergiertes Polyol (A21), das die obigen Polymerpartikel (H) aufweist, die in einem Polyol (A2), welches ein anderes Polyol als das Polyoxyalkylenpolyol (A1) ist, dispergiert sind;
(A2): ein Polyol mit einem Durchschnitt von 2 bis 8 Hydroxygruppen und einer Hydroxylzahl von 25 bis 160 mgKOH/g.

**14.** Sitz, bei dem ein Polyurethan-Weichschaum, der nach dem in einem der Ansprüche 1 bis 13 definierten Verfahren hergestellt wird, verwendet wird.

## Revendications

**1.** Procédé pour produire une mousse de polyuréthane flexible, qui comprend la réaction et le moussage et le durcissement d'un mélange réactif contenant un polyol (A), un composé polyisocyanate (B), un catalyseur (C) et un agent d'expansion (D), dans lequel
le polyol (A) contient de 2 à 100 % en masse d'un polyoxyalkylène-polyol (A1) obtenu par le procédé de production suivant, pour 100 % en masse du polyol (A) :

procédé pour produire le polyoxyalkylène-polyol (A1) : un procédé pour produire un polyoxyalkylène-polyol par soumission d'un oxyde d'alkylène à une polymérisation par addition par ouverture de cycle au moyen d'un amorceur comportant un groupe hydroxy en présence d'un catalyseur complexe de cyanure métallique double ; comprenant
une étape initiale consistant à fournir un oxyde d'alkylène, en une quantité de 5 à 20 parties en masse pour 100 parties en masse de l'amorceur, à un système réacteur contenant l'amorceur et le catalyseur complexe de cyanure métallique double pour effectuer une réaction, et une étape de polymérisation consistant à de nouveau fournir un oxyde d'alkylène au système réactionnel après l'étape initiale pour effectuer la polymérisation par addition par ouverture de cycle, où
dans l'étape initiale, la température du système réactionnel lorsque la fourniture de l'oxyde d'alkylène démarre est de 120 à 165°C, et la température maximale du système réactionnel après la fourniture de l'oxyde d'alkylène dans l'étape initiale est supérieure de 15 à 50°C à la température lorsque la fourniture de l'oxyde d'alkylène démarre.

**2.** Procédé pour produire une mousse de polyuréthane flexible selon la revendication 1, dans lequel le polyol (A) contient de 40 à 100 % en masse du polyoxyalkylène-polyol (A1) pour 100 % en masse du polyol (A).

**3.** Procédé pour produire une mousse de polyuréthane flexible selon la revendication 1 ou 2, dans lequel l'oxyde d'alkylène fourni dans l'étape de polymérisation est l'oxyde de propylène seul ou un mélange d'oxyde de propylène et d'oxyde d'éthylène.

**4.** Procédé pour produire une mousse de polyuréthane flexible selon l'une quelconque des revendications 1 à 3, dans lequel le catalyseur complexe de cyanure métallique double comporte de l'alcool tert-butylique en tant que ligand organique.

**5.** Procédé pour produire une mousse de polyuréthane flexible selon l'une quelconque des revendications 1 à 4, dans lequel le procédé pour produire le polyoxyalkylène-polyol (A1) comprend en outre, après l'étape de polymérisation, une étape consistant à faire réagir de l'oxyde d'éthylène avec le polyol formé lors de l'étape de polymérisation en présence d'un catalyseur à base de métal alcalin.

**6.** Procédé pour produire une mousse de polyuréthane flexible selon l'une quelconque des revendications 1 à 5, dans lequel le nombre moyen de groupes hydroxy du polyoxyalkylène-polyol (A1) est de 2 à 8, son indice d'hydroxyle est de 5 à 45 mg KOH/g, son degré d'insaturation est d'au plus 0,030 méq/g, et sa teneur en groupe oxyéthylène est de 5 à 30 % en masse.

7. Procédé pour produire une mousse de polyuréthane flexible selon l'une quelconque des revendications 1 à 6, dans lequel le nombre moyen de groupes hydroxy du polyoxyalkylène-polyol (A1) est de 2,5 à 4,5.

8. Procédé pour produire une mousse de polyuréthane flexible selon l'une quelconque des revendications 5 à 7, dans lequel la quantité totale des groupes oxyéthylène contenus est présente au niveau de parties terminales de la molécule.

9. Procédé pour produire une mousse de polyuréthane flexible selon l'une quelconque des revendications 1 à 8, dans lequel le mélange réactif contient en outre un agent de réticulation (E), et l'agent de réticulation (E) est au moins un agent de réticulation choisi parmi le premier agent de réticulation (E1) et le deuxième agent de réticulation (E2) suivants :

premier agent de réticulation (E1) : un polyoxyalkylène-polyol présentant un indice d'hydroxyle de 160 à 1000 mg KOH/g ;
deuxième agent de réticulation (E2) : un composé ne comportant pas de chaîne polyéther, et comportant au moins deux groupes hydrogène actifs, et dans le cas où les groupes hydrogène actifs sont des groupes hydroxy, présentant un indice d'hydroxyle supérieur à 1000 mg KOH/g.

10. Procédé pour produire une mousse de polyuréthane flexible selon l'une quelconque des revendications 1 à 9, dans lequel le mélange réactif contient en outre l'agent d'ouverture d'alvéoles (F) suivant :

agent d'ouverture d'alvéoles (F) : un polyoxyalkylène-polyol comportant en moyenne de 2 à 8 groupes hydroxy, présentant un indice d'hydroxyle de 20 à 200 mg KOH/g, et comportant une teneur en oxyde d'éthylène de 50 à 100 % en masse.

11. Procédé pour produire une mousse de polyuréthane flexible selon l'une quelconque des revendications 1 à 10, dans lequel l'agent d'expansion (D) est l'eau.

12. Procédé pour produire une mousse de polyuréthane flexible selon l'une quelconque des revendications 1 à 11, dans lequel le polyol (A) contient des particules polymères (H) en une quantité de 0 à 30 % en masse.

13. Procédé pour produire une mousse de polyuréthane flexible selon la revendication 12, dans lequel, dans le polyol (A), le polyol contenant un polymère dispersé (A21) suivant est combiné :

(A21) : un polyol contenant un polymère dispersé (A21) possédant les particules polymères (H) ci-dessus dispersées dans un polyol (A2) qui est un polyol autre que le polyoxyalkylène-polyol (A1) ;
(A2) : un polyol possédant en moyenne de 2 à 8 groupes hydroxy et présentant un indice d'hydroxyle de 25 à 160 mg KOH/g.

14. Siège utilisant une mousse de polyuréthane flexible produite par le procédé tel que défini dans l'une quelconque des revendications 1 à 13.

Fig. 1

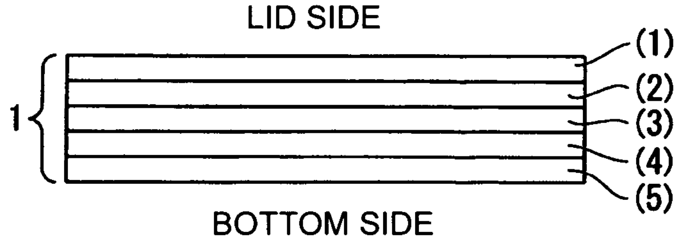


Fig. 2

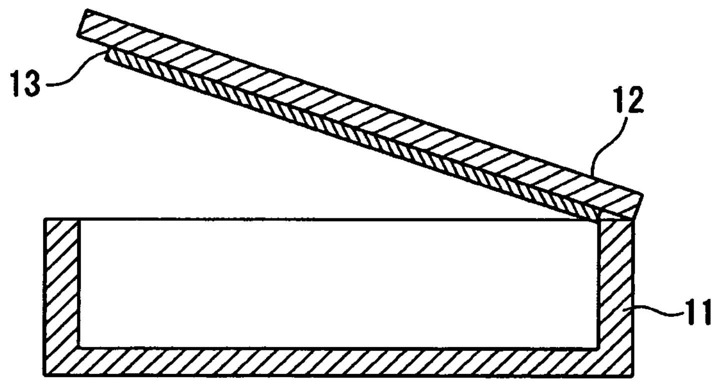


Fig. 3

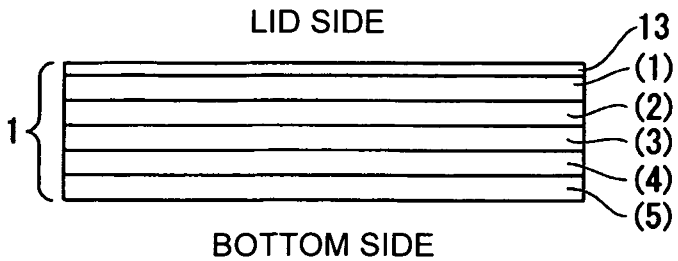

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2616054 B
- JP 2616055 B
- EP 1911783 A1
- JP 2003342361 A